# EUROPEAN PATENT APPLICATION

(11) **EP 4 800 826 A1**
(43) Date of publication of application: **02.09.2026**
(21) Application number: 24889890.0
(22) Date of filing: 08.01.2024
(51) Int. Cl.: H01M 50/367, H01M 10/0587, H01M 10/052, H01M 10/0525, H01M 10/054, H01M 50/249, H01M 50/213

(54) **BATTERY CELL, BATTERY AND ELECTRIC DEVICE**

(30) Priority: 14.11.2023 CN 202323062094 U
(71) Applicant: Contemporary Amperex Technology Co., Limited, Ningde, Fujian 352100 (CN)
(72) Inventor: JIN, Kun, Ningde, Fujian 352100 (CN); CAI, Fukang, Ningde, Fujian 352100 (CN)
(74) Representative: Gong, Jinping
(86) International application number: PCT/CN2024/071218
(87) International publication number: WO 2025/102515

(57) **Abstract**

This application discloses a battery cell, a battery, and an electric apparatus. The battery cell includes a housing, an electrode assembly, and a pressure relief mechanism. The housing includes an accommodation space and a first wall portion. The electrode assembly is located within the accommodation space, the electrode assembly includes a first tab, the first tab is located on a side of the electrode assembly facing the first wall portion, and the first tab is connected to the first wall portion and divides the accommodation space into a first subspace and a second subspace. The pressure relief mechanism is disposed at the housing, and the pressure relief mechanism is configured to actuate when an internal pressure of the first subspace reaches a threshold to release the internal pressure of the first subspace. The first wall portion is provided with a communication channel, and the communication channel enables communication between the first subspace and the second subspace, achieving rapid internal pressure balance in the battery cell. The pressure relief mechanism provides good prompt pressure relief performance, and the battery cell exhibits high operational reliability.

## Description

This application claims priority to Chinese Patent Application No. 202323062094.9, filed on November 14, 2023 and entitled "BATTERY CELL, BATTERY, AND ELECTRIC APPARATUS", which is incorporated herein by reference in its entirety.

### TECHNICAL FIELD

This application relates to the field of battery technology, and in particular, to a battery cell, a battery, and an electric apparatus.

### BACKGROUND

With the rapid development of new energy technology, the application of new energy vehicles is becoming increasingly widespread. As the power source of new energy vehicles, the battery is one of the core components of new energy vehicles. A battery typically includes one or more battery cells to meet the high-power use demands of the battery.

To improve the operational reliability of a battery cell, the battery cell is typically provided with a pressure relief mechanism, and the internal pressure of the battery cell is released promptly through the pressure relief mechanism, reducing the risk of continuous escalation of thermal runaway of the battery cell. However, in practical use, the pressure in some regions within the battery cell is difficult to release promptly through the pressure relief mechanism, resulting in an internal pressure imbalance in the battery cell, which affects the operational reliability of the battery cell.

### SUMMARY

An objective of embodiments of this application is to provide a battery cell, a battery, and an electric apparatus, including but not limited to addressing the issue in the related art where the operational reliability of a battery cell is affected because the pressure in some regions within the battery cell is difficult to release through a pressure relief mechanism.

The embodiments of this application adopt the following technical solutions.

According to a first aspect, an embodiment of this application provides a battery cell. The battery cell includes a housing, an electrode assembly, and a pressure relief mechanism. The housing includes an accommodation space and a first wall portion. The electrode assembly is located within the accommodation space, the electrode assembly includes a first tab, the first tab is located on a side of the electrode assembly facing the first wall portion, and the first tab is connected to the first wall portion and divides the accommodation space into a first subspace and a second subspace. The pressure relief mechanism is disposed at the housing, and the pressure relief mechanism is configured to actuate when an internal pressure of the first subspace reaches a threshold to release the internal pressure of the first subspace. The first wall portion is provided with a communication channel, and the communication channel enables communication between the first subspace and the second subspace.

In the battery cell of this embodiment of this application, during thermal runaway, an emission medium generated by the electrode assembly enters the first subspace and the second subspace, causing the internal pressure of the first subspace and the second subspace to rise. When the internal pressure of the first subspace reaches the threshold, the pressure relief mechanism actuates, and the emission medium in the first subspace is discharged through the pressure relief mechanism, thereby releasing the internal pressure of the first subspace. Since the first subspace and the second subspace communicate with each other through the communication channel, the emission medium in the second subspace can also enter the first subspace through the communication channel and then be discharged through the pressure relief mechanism, thereby releasing the internal pressure of the second subspace. This achieves rapid internal pressure balance in the battery cell, the pressure relief mechanism provides good prompt pressure relief performance, and the battery cell exhibits high operational reliability.

In one embodiment, the communication channel includes a communication groove, the communication groove is formed on a surface of the first wall portion facing the first tab, one end of the communication groove communicates with the first subspace, and the other end of the communication groove communicates with the second subspace.

By adopting the technical solution of this embodiment, forming the communication groove on the surface of the first wall portion facing the first tab is a simple operation, which helps to improve the production efficiency of the battery cell.

In one embodiment, a wall surface of the communication groove facing the first tab is provided with a support protrusion.

By adopting the technical solution of this embodiment, the support protrusion can support the first tab and prevents the first tab from entering the communication groove and sealing the communication groove, thereby improving the reliability of the communication groove in enabling communication between the first subspace and the second subspace and improving the operational reliability of the battery cell.

In one embodiment, the support protrusion protrudes from the communication groove.

By adopting the technical solution of this embodiment, after the first tab is connected to the first wall portion, the first tab abuts against the support protrusion, so that the first tab is located outside the communication groove, making it difficult for the first tab to enter the communication groove and seal the communication groove, improving the reliability of the communication groove in enabling communication between the first subspace and the second subspace, and further improving the operational reliability of the battery cell.

In one embodiment, a depth of the communication groove is T₁, and a thickness of the first wall portion is T₂, where 0.3 ≤ T₁/T₂ ≤ 0.6.

By adopting the technical solution of this embodiment, the design of 0.3 ≤ T₁/T₂ ≤ 0.6 enables the first wall portion to balance structural strength and flow area, helping to improve the operational reliability of the battery cell.

In one embodiment, 0.4 ≤ T₁/T₂ ≤ 0.5.

By adopting the technical solution of this embodiment, the design of 0.4 ≤ T₁/T₂ ≤ 0.5 enables the first wall portion to better balance the structural strength and flow area, helping to improve the operational reliability of the battery cell.

In one embodiment, the first wall portion is circular, a width of the communication groove is L, and a diameter of the first wall portion is D, where 0 < L/D ≤ 0.1.

By adopting the technical solution of this embodiment, the design of 0 < L/D ≤ 0.1 ensures that a region of the first wall portion provided with the communication groove is not excessively large and the first wall portion has good structural strength, helping to improve the operational reliability of the battery cell.

In one embodiment, 0.001 ≤ L/D ≤ 0.05.

By adopting the technical solution of this embodiment, the design of 0.001 ≤ L/D ≤ 0.05 enables the first wall portion to better balance the structural strength, connection strength, and flow area, effectively improving the operational reliability of the battery cell.

In one embodiment, the depth of the communication groove is T₁, where 0.1 mm ≤ T₁ ≤ 0.6 mm.

By adopting the technical solution of this embodiment, the design of 0.1 mm ≤ T₁ ≤ 0.6 mm enables the first wall portion to balance the structural strength and flow area, helping to improve the operational reliability of the battery cell.

In one embodiment, 0.3 mm ≤ T₁ ≤ 0.5 mm.

By adopting the technical solution of this embodiment, the design of 0.3 mm ≤ T₁ ≤ 0.5 mm enables the first wall portion to better balance the structural strength and flow area, helping to improve the operational reliability of the battery cell.

In one embodiment, the width of the communication groove is L, where 0.3 mm ≤ L ≤ 20 mm.

By adopting the technical solution of this embodiment, the design of 0.3 mm ≤ L ≤ 20 mm enables the first wall portion to effectively balance the structural strength, connection strength, and flow area, effectively improving the operational reliability of the battery cell.

In one embodiment, 5 mm ≤ L ≤ 10 mm.

By adopting the technical solution of this embodiment, the design of 5 mm ≤ L ≤ 10 mm enables the first wall portion to better balance the structural strength, connection strength, and flow area, effectively improving the operational reliability of the battery cell.

In one embodiment, multiple communication channels are provided, and the multiple communication channels are distributed at intervals along a circumferential direction of the first tab.

By adopting the technical solution of this embodiment, the first subspace and the second subspace communicate with each other through the multiple communication channels, allowing the emission medium in the second subspace to be discharged through the multiple communication channels, helping to realize rapid internal pressure balance in the battery cell. Additionally, the multiple communication channels are distributed at intervals along the circumferential direction of the first tab, so that the emission medium at any position in the second subspace can quickly reach the communication channels, achieving timely discharge of the emission medium in the second subspace and effectively improving the operational reliability of the battery cell.

In one embodiment, the first tab is welded to the first wall portion to form a first weld structure, and a projection of the first weld structure along a first direction and a projection of the communication channel along the first direction do not overlap or partially overlap, where the first direction is a distribution direction of the first tab and the first wall portion.

By adopting the technical solution of this embodiment, the first tab is directly welded to the first wall portion, simplifying the assembly operation of the battery cell. Additionally, the projection of the first weld structure along the first direction and the projection of the communication channel along the first direction do not overlap or partially overlap, enabling segmented welding of the first tab and the first wall portion. On one hand, the welding can avoid at least a portion of the communication channel, ensuring that the first weld structure does not seal the communication channel, thus enabling communication between the first subspace and the second subspace. On the other hand, a spacing generated between the first tab and the first wall portion by previous segment welding does not accumulate in subsequent segment welding, reducing spacing accumulation between the first tab and the first wall portion, improving the welding quality of the first weld structure, and improving the operational reliability of the battery cell.

In one embodiment, the battery cell further includes a first current collector located between the first tab and the first wall portion; the first current collector is connected to the first tab; the first current collector is welded to the first wall portion to form a second weld structure; and a projection of the second weld structure along a first direction and a projection of the communication channel along the first direction do not overlap or partially overlap, where the first direction is a distribution direction of the first tab and the first wall portion.

By adopting the technical solution of this embodiment, the first wall portion is connected to the first tab through the first current collector, and the first wall portion can be closely welded to the first current collector, reducing the risk of generation of microcracks in the first wall portion, ensuring good airtightness of the housing, and improving the operational reliability of the battery cell. Additionally, the first current collector is welded to the first tab, so that even when microcracks occur in the first current collector, the airtightness of the housing remains unaffected. Furthermore, similarly, the projection of the second weld structure along the first direction and the projection of the communication channel along the first direction do not overlap or partially overlap, enabling segmented welding of the first current collector and the first wall portion. On one hand, the welding can avoid at least a portion of the communication channel, ensuring that the second weld structure does not seal the communication channel, thus enabling communication between the first subspace and the second subspace. On the other hand, a spacing generated between the first current collector and the first wall portion by previous segment welding does not accumulate in subsequent segment welding, reducing spacing accumulation between the first current collector and the first wall portion, improving the welding quality of the second weld structure, and improving the operational reliability of the battery cell.

In one embodiment, a surface of the first wall portion facing away from the first tab is provided with an identification structure, and the identification structure is configured to indicate a position of the communication channel.

By adopting the technical solution of this embodiment, during a welding process of the first wall portion and the first current collector or the first tab, the welding can avoid the communication channel according to the identification structure, ensuring reliable and stable communication between the first subspace and the second subspace, improving the promptness of pressure relief in the battery cell, and improving the operational reliability of the battery cell.

In one embodiment, the identification structure includes at least one of an identification protrusion, an identification groove, a sticker, and a stamp.

By adopting the technical solution of this embodiment, the identification structure can be flexibly disposed to meet different production requirements.

In one embodiment, the first wall portion includes a body and a protrusion, the protrusion protrudes from a surface of the body facing the first tab, the protrusion is arranged around the body, the communication channel is disposed at the protrusion, the pressure relief mechanism is disposed at the body, the protrusion abuts against and is connected to the first tab, a pressure relief gap communicating with the communication channel is formed between the body and the first tab, and the pressure relief gap is located in the first subspace.

By adopting the technical solution of this embodiment, after the emission medium in the second subspace enters the pressure relief gap through the communication channel, the emission medium can quickly flow to the pressure relief mechanism through the pressure relief gap and ultimately be discharged through the pressure relief mechanism, enabling faster internal pressure balance in the battery cell and improving the operational reliability of the battery cell. Additionally, the pressure relief gap can provide actuation space for the pressure relief mechanism, allowing the pressure relief mechanism to actuate promptly for pressure relief, thereby improving the promptness of pressure relief in the battery cell.

In one embodiment, the housing includes a shell and an end cover, the end cover covers an opening of the shell, the end cover and the shell jointly enclose the accommodation space, the end cover is the first wall portion, or a wall portion of the shell is the first wall portion.

By adopting the technical solution of this embodiment, by adopting the technical solution of this embodiment, the electrode assembly can be placed into the shell through the opening of the shell, and the opening of the shell is sealed using the end cover. In this way, the electrode assembly is encapsulated within the housing. The assembly operation is simple, helping to improve the production and manufacturing efficiency of the battery cell.

In one embodiment, the electrode assembly further includes a second tab, the second tab is located on a side of the electrode assembly facing away from the first wall portion, and a polarity of the first tab is opposite to a polarity of the second tab. The battery cell further includes an electrode terminal and a first insulating member. The housing includes a second wall portion disposed opposite the first wall portion, the second wall portion is provided with an electrode lead-out hole communicating with the accommodation space, the first insulating member sleeves an outer side of the electrode terminal, the first insulating member passes through the electrode lead-out hole to insulate and separate the electrode terminal from the housing, and the second tab is connected to the electrode terminal to achieve electrical connection between the second tab and the electrode terminal.

By adopting the technical solution of this embodiment, the housing serves as an output pole of the battery cell, and the electrode terminal serves as another output pole of the battery cell. The housing and the electrode terminal can be connected to an external circuit to enable charging and discharging of the battery cell.

In one embodiment, the electrode assembly further includes a second current collector and a second insulating member. The second current collector is connected between the second tab and the electrode terminal to achieve electrical connection between the second tab and the electrode terminal; and at least a portion of the second insulating member is located between the second current collector and the second wall portion.

By adopting the technical solution of this embodiment, the second tab and the electrode terminal are connected through the second current collector, the second current collector can support the second tab and the electrode terminal, improving the connection stability between the second tab and the electrode terminal, and helping to improve the operational reliability of the battery cell. Additionally, the second insulating member can insulate and separate the second current collector from the housing, reducing the risk of short circuits.

In one embodiment, the battery cell further includes a sealing member, the electrode terminal is provided with an electrolyte injection hole communicating with the accommodation space, and the sealing member covers an opening of the electrolyte injection hole facing away from the electrode assembly to seal the electrolyte injection hole.

By adopting the technical solution of this embodiment, the provision of the electrolyte injection hole enables electrolyte injection into the battery cell, and the sealing member can seal the electrolyte injection hole, reducing the risk of electrolyte leakage.

According to a second aspect, a battery is provided, including the battery cell according to the above embodiments.

The battery of this embodiment of this application adopts the above battery cell, where the battery cell has good operational reliability, which improves the operational reliability and performance of the battery.

According to a third aspect, an electric apparatus is provided, including the battery according to the above embodiment.

The electric apparatus of this embodiment of this application adopts the above battery, where the battery has good operational reliability and performance, which improves the operational reliability and performance of the electric apparatus.

The above description is only an overview of the technical solutions of this application. To facilitate a clearer understanding of the technical means of this application so that the technical means can be implemented according to the content of the specification, and to make the above and other objectives, features, and advantages of this application more apparent and understandable, specific embodiments of this application are provided below.

### BRIEF DESCRIPTION OF DRAWINGS

To more clearly illustrate the technical solutions in the embodiments of this application, the drawings required for the description of the embodiments or the prior art are briefly introduced below. It is apparent that the drawings described below are only some embodiments of this application, and those of ordinary skill in the art can obtain other drawings based on these drawings without creative effort.
FIG. 1 shows a schematic structural diagram of a vehicle according to an embodiment of this application.
FIG. 2 shows a schematic structural diagram of a battery according to another embodiment of this application.
FIG. 3 shows a schematic structural diagram of a battery cell according to still another embodiment of this application.
FIG. 4 shows an exploded view of the battery cell shown in FIG. 3.
FIG. 5 shows a cross-sectional view along line A-A in FIG. 3.
FIG. 6 shows a partially enlarged view at location B in FIG. 5.
FIG. 7 shows a partially enlarged view of a battery cell according to another embodiment of this application at location B in FIG. 5.
FIG. 8 shows a schematic structural diagram of an end cover according to still another embodiment of this application.
FIG. 9 shows a schematic structural diagram of an end cover according to yet another embodiment of this application.
FIG. 10 shows a schematic structural diagram of an end cover according to further another embodiment of this application.
FIG. 11 shows a cross-sectional view along line C-C in FIG. 10.
FIG. 12 shows a partially enlarged view at location D in FIG. 11.
FIG. 13 shows a partially enlarged view of an end cover according to further another embodiment of this application at location D in FIG. 11.

Description of reference signs:
1000. vehicle; 1100. battery; 1200. controller; 1300. motor; 10. box; 11. first part; 12. second part; 20. battery cell; 21. housing; 2101. accommodation space; 2102. first subspace; 2103. second subspace; 2104. pressure relief gap; 211. first wall portion; 2111. communication channel; 2112. communication groove; 2113. support protrusion; 2114. identification structure; 21141. identification protrusion; 2115. body; 2116. protrusion; 2117. extension portion; 212. end cover; 213. shell; 214. second wall portion; 2141. electrode lead-out hole; 22. electrode assembly; 221. first tab; 222. second tab; 223. central hole; 23. pressure relief mechanism; 231. annular groove; 24. first current collector; 241. first communication hole; 25. electrode terminal; 251. electrolyte injection hole; 26. first insulating member; 27. second current collector; 271. second communication hole; 28. second insulating member; 29. sealing member; W. connection structure; W1. first weld structure; W2. second weld structure; and W3. third weld structure.

### DESCRIPTION OF EMBODIMENTS

To make the technical problems, technical solutions, and beneficial effects to be solved by this application clearer, this application is further described in detail below in conjunction with the drawings and embodiments. It should be understood that the specific embodiments described herein are only used to explain this application and are not intended to limit this application.

Unless otherwise defined, all technical and scientific terms used herein have the same meaning as commonly understood by those skilled in the technical field of this application. The terms used herein are only for the purpose of describing specific embodiments and are not intended to limit this application. The terms "include" and "comprise" in the specification, claims, and the above description of the drawings of this application, as well as any variations thereof, are intended to cover non-exclusive inclusion.

In the description of the embodiments of this application, the technical terms "first", "second", and the like are used only to distinguish between different objects and should not be understood as indicating or implying relative importance or implicitly indicating the number, specific order, or primary-secondary relationship of the technical features indicated. Thus, a feature defined with "first" or "second" may explicitly or implicitly include one or more of such features.

Reference to "embodiments" in this specification means that particular features, structures, or characteristics described with reference to the embodiments may be included in at least one embodiment of this application. Occurrence of the phrase in various places in this specification does not necessarily refer to the same embodiment, nor is an independent or alternative embodiment that is mutually exclusive with other embodiments. It is understood explicitly and implicitly by those skilled in the art that the embodiments described in this specification may be combined with other embodiments.

In the description of the embodiments of this application, the term "and/or" is merely an association relationship describing associated objects, indicating that three relationships may exist, for example, A and/or B may indicate: only A is present, both A and B are present, and only B is present. Additionally, the character "/" herein generally indicates an "or" relationship between the contextually associated objects.

In the description of the embodiments of this application, the term "multiple" refers to two or more (including two), similarly, "multiple groups" refers to two or more groups (including two groups), and "multiple pieces" refers to two or more pieces (including two pieces). The meaning of "several" is one or more, unless otherwise explicitly and specifically defined.

In the description of the embodiments of this application, the technical terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", "circumferential", and the like indicate orientations or positional relationships based on the orientations or positional relationships shown in the drawings. These terms are used only for the convenience of describing the embodiments of this application and simplifying the description, and do not indicate or imply that the referred apparatus or element must have a specific orientation, be constructed or manipulated in a specific orientation, and therefore should not be construed as limiting the embodiments of this application.

In the description of the embodiments of this application, unless otherwise explicitly specified and defined, the technical terms "mounting", "connection", "join", "fastening", and the like should be understood in a broad sense, for example, it may be a fixed connection, a detachable connection, or an integral connection; it may be a mechanical connection or an electrical connection; it may be a direct connection or an indirect connection through an intermediate medium; or it may be an internal communication between two elements or an interaction relationship between two elements. For those of ordinary skill in the art, the specific meanings of the above terms in the embodiments of this application can be understood according to specific circumstances.

In the description of the embodiments of this application, unless otherwise explicitly specified and defined, when an element is referred to as being "fixed to" or "disposed at" another element, it may be directly at the another element or indirectly at the another element. When an element is referred to as being "connected to" another element, it may be directly connected to the another element or indirectly connected to the another element.

With the rapid development of new energy technology, the application of new energy vehicles is becoming increasingly widespread. As the power source of new energy vehicles, the battery is one of the core components of new energy vehicles. A battery typically includes one or more battery cells to meet the high-power use demands of the battery.

To improve the operational reliability of a battery cell, the battery cell is typically provided with a pressure relief mechanism, and the internal pressure of the battery cell is released promptly through the pressure relief mechanism, reducing the risk of continuous escalation of thermal runaway of the battery cell. However, in practical use, the pressure in some regions within the battery cell is difficult to release promptly through the pressure relief mechanism, resulting in an internal pressure imbalance in the battery cell, which affects the operational reliability of the battery cell.

A battery cell may refer to the smallest energy storage unit in a battery. The battery cell typically includes a housing and an electrode assembly. An accommodation space is formed in the housing, and the electrode assembly is located within the accommodation space. Under a condition that the battery cell undergoes thermal runaway, the electrode assembly generates a large amount of emission medium, causing the pressure within the accommodation space to rise. To improve the operational reliability of the battery cell, the housing is typically provided with a pressure relief mechanism. When the pressure in the accommodation space reaches a threshold, the pressure relief mechanism actuates, and the emission medium in the accommodation space is discharged outward, promptly releasing the pressure in the accommodation space, thereby reducing the risk of explosion in the battery cell.

Under some conditions, a tab of the electrode assembly is connected to an opposite wall portion of the housing, helping to lead out a current of the electrode assembly. The wall portion of the housing is welded to the tab along a circumferential direction of the tab. However, the tab is welded to the housing to form a weld structure which divides the accommodation space into two subspaces that are difficult to communicate with each other. Additionally, the pressure relief mechanism disposed at the housing, the pressure relief mechanism is disposed corresponding to only one of the subspaces, so that during thermal runaway of the battery cell, the pressure relief mechanism can release the internal pressure of only the corresponding subspace promptly, while the pressure in the other subspace cannot be promptly transmitted to the pressure relief mechanism for release, resulting in an internal pressure imbalance in the battery cell, which significantly affects the operational reliability of the battery cell.

To improve the operational reliability of the battery cell, this embodiment of this application provides the battery cell, where the first tab of the electrode assembly is connected to the first wall portion of the housing and divides the accommodation space into the first subspace and the second subspace. In addition, the pressure relief mechanism can release the internal pressure of the first subspace, the first wall portion is provided with the communication channel, and the communication channel enables communication between the first subspace and the second subspace, allowing the internal pressure of the second subspace to be transmitted to the first subspace through the communication channel and then released through the pressure relief mechanism. This achieves rapid internal pressure balance in the battery cell, the pressure relief mechanism provides good prompt pressure relief performance, and the battery cell exhibits high operational reliability.

The embodiments of this application disclose the battery cell, the battery, and the electric apparatus using the battery as a power source. The electric apparatus may be, but is not limited to, a mobile phone, a tablet, a laptop, an electric toy, an electric tool, an electric bicycle, an electric vehicle, a ship, and a spacecraft. The electric toy may include fixed or mobile electric toys, such as game consoles, electric car toys, electric ship toys, and electric airplane toys, while the spacecraft may include airplanes, rockets, space shuttles, spaceships, and the like.

For convenience of description, an example in which an electric apparatus according to an embodiment of this application is a vehicle 1000 is used for description in the following embodiments.

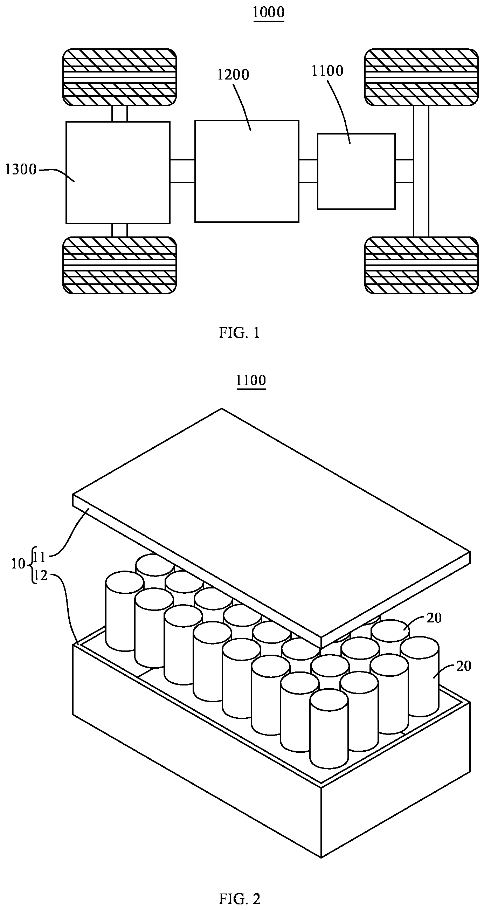

Referring to FIG. 1, the vehicle 1000 may be a fuel vehicle, a gas vehicle, or a new energy vehicle, where the new energy vehicle may be a battery electric vehicle, a hybrid vehicle, an extended-range vehicle, or the like. The vehicle 1000 is provided with a battery 1100 inside, and the battery 1100 may be disposed at the bottom, front, or rear of the vehicle 1000. The battery 1100 may be configured to supply power to the vehicle 1000, for example, the battery 1100 may serve as an operational power source for the vehicle 1000. The vehicle 1000 may further include a controller 1200 and a motor 1300, where the controller 1200 is configured to control the battery 1100 to supply power to the motor 1300, for example, for the operational power requirements during starting, navigation, and driving of the vehicle 1000.

In some embodiments of this application, the battery 1100 can not only serve as an operational power source for the vehicle 1000 but also as a driving power source for the vehicle 1000, replacing or partially replacing fuel or natural gas to provide driving power for the vehicle 1000.

Referring to FIG. 2, as an embodiment of the battery 1100, the battery 1100 includes a box 10 and a battery cell 20, and the battery cell 20 is accommodated within the box 10. The box 10 is configured to provide an accommodation space 2101 for the battery cell 20, and the box 10 may adopt various structures. In some embodiments, the box 10 may include a first part 11 and a second part 12, the first part 11 and the second part 12 cover each other, and the first part 11 and the second part 12 jointly enclose the accommodation space 2101 for accommodating the battery cell 20. The second part 12 may be a hollow structure with an opening at one end, the first part 11 may be a plate-like structure, and the first part 11 covers the open side of the second part 12, so that the first part 11 and the second part 12 jointly define the accommodation space 2101. Alternatively, both the first part 11 and the second part 12 may be a hollow structure with an opening at one side, and the open side of the first part 11 covers the open side of the second part 12. Certainly, the box 10 formed by the first part 11 and the second part 12 may be of various shapes, such as a cylinder or a cuboid.

In the battery 1100, there may be multiple battery cells 20, and the multiple battery cells 20 may be connected in series, in parallel, or in series-parallel, where the series-parallel connection refers to a combination of a series connection and a parallel connection between the multiple battery cells 20.

For example, the battery 1100 includes one or more battery cells 20. Under a condition that the battery 1100 includes multiple battery cells 20, the multiple battery cells 20 may be directly connected in series, in parallel, or in series-parallel, and then an entirety formed by the multiple battery cells 20 is accommodated within the box 10. The battery cell 20 may be a lithium-ion secondary battery, a lithium-sulfur battery, a sodium-lithium-ion battery, a sodium-ion battery, a magnesium-ion battery, or the like. The battery cell 20 may have a cylindrical shape, a flat shape, a cuboid shape, or other shapes. The battery cell 20 may be packaged in different ways to form a cylindrical battery cell, a prismatic battery cell, a pouch battery cell, or the like.

Alternatively, the battery cell 20 may be a battery 1100 module or a battery 1100 pack. At least two battery cells 20 may first be connected in series, in parallel, or in series-parallel to form a modular structure, which is a battery module or battery pack; and then at least two battery modules or battery packs are connected in series, in parallel, or in series-parallel to form an entirety which is accommodated within the box 10.

As another embodiment of the battery 1100, the battery 1100 may not include the box 10, but instead, multiple battery cells 20 are electrically connected and assembled into the vehicle 1000; or, they are formed into an entirety through some fixing structure and then assembled into the vehicle 1000.

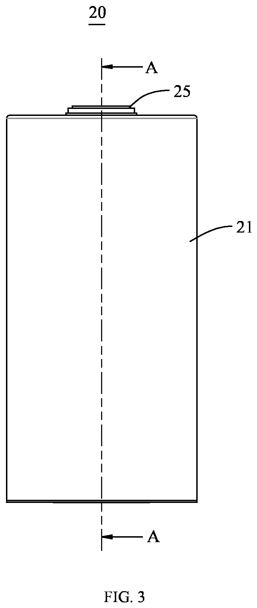

Referring to FIG. 3 to FIG. 5, the battery cell 20 refers to the smallest unit constituting the battery 1100. The battery cell 20 includes a housing 21 and an electrode assembly 22, the housing 21 is configured to enclose an accommodation space 2101, the accommodation space 2101 serves as an internal environment of the battery cell 20 and is configured to accommodate the electrode assembly 22, and the housing 21 can isolate the internal environment of the battery cell 20 from the external environment.

In an example, the housing 21 includes an end cover 212 and a shell 213. The end cover 212 refers to a component that covers an opening of the shell 213 to isolate the internal environment of the battery cell 20 from the external environment. Without limitation, the end cover 212 may be adapted to the shell 213 in shape so as to fit with the shell 213. Optionally, the end cover 212 may be made of a material with a certain hardness and strength (such as an aluminum alloy), so that the end cover 212 is less likely to deform when subjected to squeezing or collision, enabling the battery cell 20 to have higher structural strength and improved safety performance. The end cover 212 may be made of various materials, such as copper, iron, aluminum, stainless steel, aluminum alloy, and plastic, and this is not particularly limited in the embodiments of this application.

The shell 213 refers to a component configured to cooperate with the end cover 212 to form the internal environment of the battery cell 20, where the formed internal environment can be used to accommodate the electrode assembly 22, electrolyte, and other components. The shell 213 and the end cover 212 may be separate components, and an opening may be provided on the shell 213, where the end cover 212 covers the opening to form the internal environment of the battery cell 20. Without limitation, the end cover 212 and the shell 213 may alternatively be integrated. Specifically, the end cover 212 and the shell 213 may first form a common connection surface before other components are placed into the shell, and when the interior of the shell 213 needs to be sealed, the end cover 212 covers the shell 213. The shell 213 may have various shapes and sizes, such as a cuboid shape, a cylindrical shape, and a hexagonal prism shape. Specifically, the shape of the shell 213 may be determined based on the specific shape and size of the electrode assembly 22. The shell 213 may be made of various materials, such as copper, iron, aluminum, stainless steel, aluminum alloy, and plastic, and this is not particularly limited in the embodiments of this application.

The electrode assembly 22 is a component in the battery cell 20 where electrochemical reactions take plate. The shell 213 may contain one or more electrode assemblies 22. The electrode assembly 22 includes a positive electrode plate, a negative electrode plate, and a separator. The battery cell 20 works primarily relying on metal ions moving between the positive electrode plate and the negative electrode plate. The positive electrode plate includes a positive electrode current collector and a positive electrode active material layer, and the positive electrode active material layer is applied on a surface of the positive electrode current collector. The positive electrode current collector includes a positive electrode current collection region and a positive electrode tab protruding from the positive electrode current collection region, the positive electrode current collection region is coated with the positive electrode active material layer, and at least a portion of the positive electrode tab is uncoated with the positive electrode active material layer. Taking a lithium-ion battery as an example, the material of the positive electrode current collector may be aluminum, the positive electrode active material layer includes a positive electrode active material, and the positive electrode active material may be lithium cobalt oxide, lithium iron phosphate, ternary lithium, lithium manganate, or the like. The negative electrode plate includes a negative electrode current collector and a negative electrode active material layer, and the negative electrode active material layer is applied on a surface of the negative electrode current collector. The negative electrode current collector includes a negative electrode current collection region and a negative electrode tab protruding from the negative electrode current collection region, the negative electrode current collection region is coated with the negative electrode active material layer, and at least a portion of the negative electrode tab is uncoated with the negative electrode active material layer. The material of the negative electrode current collector may be copper, the negative electrode active material layer includes a negative electrode active material, and the negative electrode active material may be carbon, silicon, or the like. The material of the separator may be PP (polypropylene, polypropylene), PE (polyethylene, polyethylene), or the like.

In one embodiment, the separator is a separation film. The type of the separation film is not particularly limited in this application, and any well-known porous structure separation film with good chemical and mechanical stability may be selected.

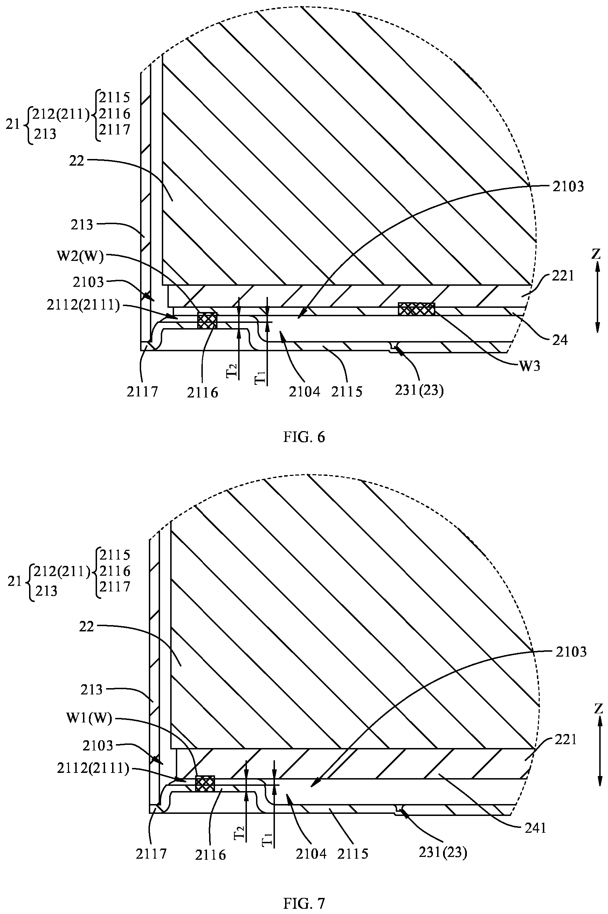

Referring to FIG. 6, an embodiment of this application provides a battery cell 20. The battery cell 20 includes a housing 21, an electrode assembly 22, and a pressure relief mechanism 23. The housing 21 includes an accommodation space 2101 and a first wall portion 211. The electrode assembly 22 is located within the accommodation space 2101, the electrode assembly 22 includes a first tab 221, the first tab 221 is located on a side of the electrode assembly 22 facing the first wall portion 211, and the first tab 221 is connected to the first wall portion 211 and divides the accommodation space 2101 into a first subspace 2102 and a second subspace 2103. The pressure relief mechanism 23 is disposed at the housing 21, and the pressure relief mechanism 23 is configured to actuate when an internal pressure of the first subspace 2102 reaches a threshold to release the internal pressure of the first subspace 2102. The first wall portion 211 is provided with a communication channel 2111, and the communication channel 2111 enables communication between the first subspace 2102 and the second subspace 2103.

The housing 21 may refer to a component configured to accommodate the electrode assembly 22, the housing 21 includes multiple wall portions, the multiple wall portions are connected to enclose the accommodation space 2101, and the accommodation space 2101 is configured to accommodate the electrode assembly 22. The first wall portion 211 may refer to a wall portion of the housing 21 that is connected to the first tab 221. In the housing 21, the first wall portion 211 may be the end cover 212 or may be a wall portion of the shell 213.

The electrode assembly 22 includes a first electrode plate, a second electrode plate, and a separator. The first electrode plate, the second electrode plate, and the separator are stacked and then wound to form a wound structure. The wound structure may be cylindrical. Certainly, in other embodiments, the wound structure may alternatively be flat or in other shapes. The separator is located between the first electrode plate and the second electrode plate to insulate and separate the first electrode plate from the second electrode plate; and the first electrode plate and the second electrode plate have opposite polarities, to be specific, one of the first electrode plate and the second electrode plate is a positive electrode plate, and the other is a negative electrode plate.

The electrode assembly 22 is provided with a first tab 221 and a second tab 222. The first tab 221 may refer to a portion of the first electrode plate that is uncoated with an active material, and the second tab 222 may refer to a portion of the second electrode plate that is uncoated with an active material. Correspondingly, one of the first tab 221 and the second tab 222 is a positive electrode tab, and the other is a negative electrode tab. The first tab 221 and the second tab 222 are respectively located on two opposite sides of the electrode assembly, the first tab 221 is located on a side of the electrode assembly 22 facing the first wall portion 211, and the second tab 222 is located on a side of the electrode assembly 22 facing away from the first wall portion 211. In an example, the first tab 221 is wound around a central axis X of the electrode assembly 22, the first tab 221 is generally cylindrical, the second tab 222 is wound around the central axis X of the electrode assembly 22, and the second tab 222 is also generally cylindrical. Certainly, the structures of the first tab 221 and the second tab 222 may alternatively be different.

After winding is completed, the first tab 221 is generally cylindrical, with gap formed between two adjacent layers in the first tab 221. In this embodiment of this application, the first tab 221 may be processed to reduce the gaps between the layers, facilitating the connection of the first tab 221 to the first wall portion 211. For example, in this embodiment of this application, the first tab 221 may be flattened to collect and gather end regions of the first tab 221 away from a body portion. Through the flattening, a dense end surface is formed at an end of the first tab 221 away from the body portion, reducing the gaps between the layers, and facilitating the connection of the first tab 221 to the first wall portion 211. Certainly, in this embodiment of this application, a conductive material may fill between two adjacent layers to reduce the gaps between the layers. Similarly, the second tab 222 may also be flattened or a conductive material is used for filling, to reduce the gaps between the layers.

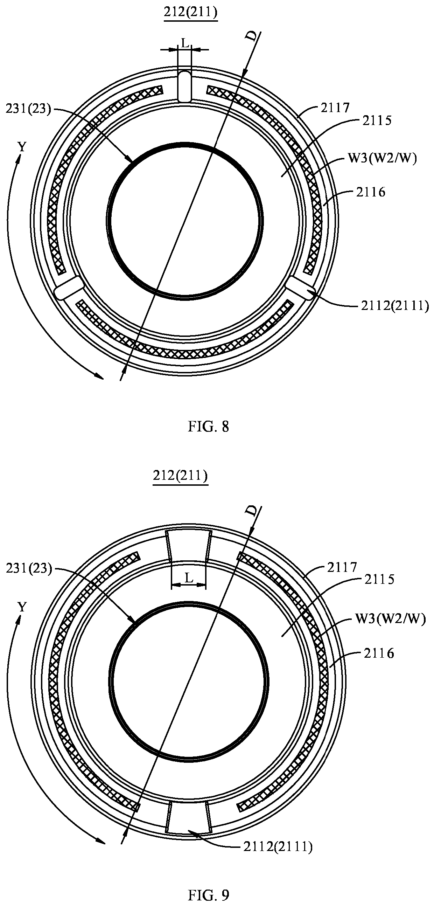

Referring to FIG. 8, the first tab 221 is connected to the first wall portion 211 and divides the accommodation space 2101 into a first subspace 2102 and a second subspace 2103. The first wall portion 211 is connected to the first tab 221 along a circumferential direction Y of the first tab 221 to form a connection structure W. The circumferential direction Y of the first tab 221 may refer to a direction around the central axis X of the electrode assembly 22, and the connection structure W is also arranged around the central axis X of the electrode assembly 22. After the first tab 221 is connected to the first wall portion 211, a region on an inner side of the connection structure W and a region on an outer side of the connection structure W in the accommodation space 2101 are difficult to communicate with each other, that is, one of the first subspace 2102 and the second subspace 2103 may be the region on the inner side of the connection structure W in the accommodation space 2101, and the other is the region on the outer side of the connection structure W in the accommodation space 2101.

Under a condition that the electrode assembly 22 is a wound structure, the central axis X of the electrode assembly 22 is a winding axis of the electrode assembly 22; and the first tab 221 is adapted to the first wall portion 211 in shape to improve the connection reliability between the first tab 221 and the first wall portion 211. Under a condition that the first tab 221 is adapted to the first wall portion 211 in shape, the circumferential direction Y of the first tab 221 may alternatively be the circumferential direction of the first wall portion 211, and a radial direction of the first tab 221 may alternatively be a radial direction of the first wall portion 211. In an example, the first tab 221 is circular, and the first wall portion 211 is also circular.

The first tab 221 and the first wall portion 211 may be connected in a segmentation manner or in a ring shape along the circumferential direction Y of the first tab 221 to enhance the connection strength between the first tab 221 and the first wall portion 211. The first tab 221 and the first wall portion 211 may be connected by welding, adhesion, or other methods to achieve electrical connection between the first tab 221 and the first wall portion 211. In addition, the housing 21 serves as an output pole of the battery cell 20, avoiding the use of one electrode terminal 25, thereby simplifying the structure of the battery cell 20. When multiple battery cells 20 are assembled into a group, a large area of the housing 21 can be electrically connected to a busbar, which not only increases a current-carrying area but also allows for more flexible structural design of the busbar.

The pressure relief mechanism 23 may refer to a component in the battery cell 20 that is configured to release the internal pressure of the first subspace 2102; and the pressure relief mechanism 23 is configured to release the internal pressure when the internal pressure of the first subspace 2102 reaches a threshold, so as to improve the safety performance of the battery cell 20. The threshold design varies depending on different design requirements. The threshold may depend on the materials of one or several of the positive electrode plate, the negative electrode plate, the electrolyte, and the separator in the battery cell 20. The pressure relief mechanism 23 may be in the form of an explosion-proof valve, a gas valve, a pressure relief valve, a safety valve, or the like, and may specifically adopt a pressure-sensitive element or structure. To be specific, when the internal pressure of the battery cell 20 reaches the threshold, the pressure relief mechanism 23 actuates, or a weak structure provided in the pressure relief mechanism 23 is destroyed, thereby forming an opening or channel for releasing the internal pressure. The pressure relief mechanism 23 may be disposed at the first wall portion 211 or at other wall portions of the housing 21, which is specifically set based on a position of the first subspace 2102. In an example, the pressure relief mechanism 23 may refer to a groove formed on a surface of the first wall portion 211 facing the accommodation space 2101, and the groove forms the weak structure. Certainly, the groove may alternatively be formed on a surface of the first wall portion 211 facing away from the accommodation space 2101, and the groove may be in a closed shape such as a circular shape, an elliptic shape, or a polygonal shape, or in a non-closed shape such as a Y shape or an H shape.

"Actuate" means that the pressure relief mechanism 23 performs an action or is activated to a specific state, thereby allowing the internal pressure of the battery cell 20 to be released. The action performed by the pressure relief mechanism 23 may include, but is not limited to: breaking, fracturing, melting, tearing, and opening of at least a portion of the pressure relief mechanism 23. When the pressure relief mechanism 23 actuates, a high-temperature and high-pressure substance inside the battery cell 20 is discharged as an emission medium from an actuation portion. In this way, the battery cell 20 can release pressure under pressure-controllable conditions, thereby avoiding more serious potential accidents. The emission medium includes, but is not limited to: electrolyte, dissolved or fragmented positive and negative electrode plates, fragments of the separation film, high-temperature and high-pressure gases generated by reactions, and flame.

The communication channel 2111 may refer to a channel in the first wall portion 211 that enables communication between the first subspace 2102 and the second subspace 2103. In an example, the communication channel 2111 may refer to a groove formed by recessing a surface of the first wall portion 211 facing the first tab 221, or may refer to a through hole provided in the first wall portion 211. Certainly, the communication channel 2111 may be another structure.

In the battery cell 20 of this embodiment of this application, during thermal runaway, the emission medium generated by the electrode assembly 22 enters the first subspace 2102 and the second subspace 2103, causing the internal pressure of the first subspace 2102 and the second subspace 2103 to rise. When the internal pressure of the first subspace 2102 reaches the threshold, the pressure relief mechanism 23 actuates, and the emission medium in the first subspace 2102 is discharged through the pressure relief mechanism 23, thereby releasing the internal pressure of the first subspace 2102. Since the first subspace 2102 and the second subspace 2103 communicate with each other through the communication channel 2111, the emission medium in the second subspace 2103 can also enter the first subspace 2102 through the communication channel 2111 and be discharged through the pressure relief mechanism 23, thereby releasing the internal pressure of the second subspace 2103. This achieves rapid internal pressure balance in the battery cell 20, the pressure relief mechanism 23 provides good prompt pressure relief performance, and the battery cell 20 exhibits high operational reliability.

In another embodiment of this application, referring to FIG. 6 and FIG. 8, the communication channel 2111 includes a communication groove 2112, the communication groove 2112 is formed on a surface of the first wall portion 211 facing the first tab 221, one end of the communication groove 2112 communicates with the first subspace 2102, and the other end of the communication groove 2112 communicates with the second subspace 2103.

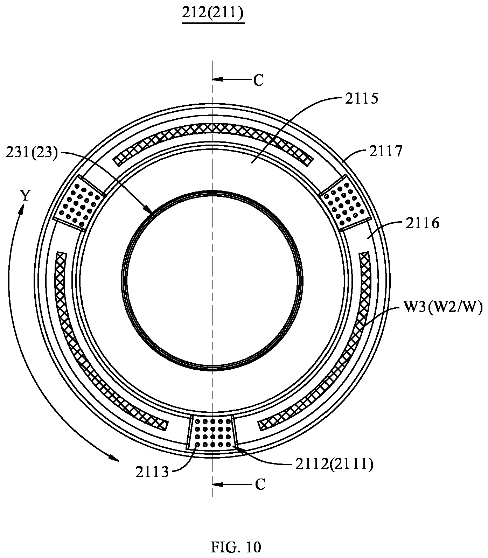

The communication groove 2112 may refer to a groove structure formed by recessing a surface of the first wall portion 211 facing the first tab 221. After the surface of the first wall portion 211 facing the first tab 221 is connected to the first tab 221, the communication groove 2112 enables communication between the first subspace 2102 and the second subspace 2103. In an example, the communication groove 2112 may extend along a radial direction of the first tab 221 to enable the communication between the first subspace 2102 and the second subspace 2103 which are located on the inner side and outer side of the connection structure W. The communication groove 2112 may be arc-shaped, polyline-shaped, rectangular (as shown in FIG. 8), fan-shaped (as shown in FIG. 9 and FIG. 10), or of other shapes. Certainly, the communication groove 2112 may alternatively extend in other directions.

By adopting the technical solution of this embodiment, forming the communication groove 2112 on the surface of the first wall portion 211 facing the first tab 221 is a simple operation, which helps to improve the production efficiency of the battery cell 20.

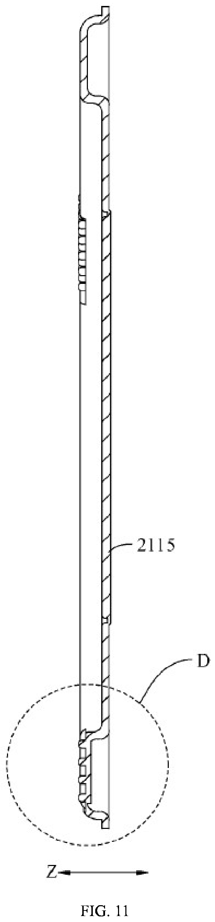

In another embodiment of this application, referring to FIG. 10 and FIG. 11, a wall surface of the communication groove 2112 facing the first tab 221 is provided with a support protrusion 2113.

The support protrusion 2113 may refer to a protrusion formed on the wall surface of the communication groove 2112 facing the first tab 221.

By adopting the technical solution of this embodiment, the support protrusion 2113 can support the first tab 221 and prevents the first tab 221 from entering the communication groove 2112 and sealing the communication groove 2112, thereby improving the reliability of the communication groove 2112 in enabling communication between the first subspace 2102 and the second subspace 2103 and improving the operational reliability of the battery cell 20.

In one embodiment, there may be multiple support protrusions 2113, the multiple support protrusions 2113 are distributed at intervals, and the multiple support protrusions 2113 can provide multipoint support to the first tab 221, which better prevents the first tab 221 from entering the communication groove 2112 and sealing the communication groove 2112.

In another embodiment of this application, referring to FIG. 10 and FIG. 11, the support protrusion 2113 protrudes from the communication groove 2112.

It can be understood that a height H of the support protrusion 2113 is greater than a depth T₁ of the communication groove 2112, that is, a portion of the support protrusion 2113 protrudes out of the communication groove 2112. An extent to which the support protrusion 2113 protrudes out of the communication groove 2112 may be set according to actual needs and is not limited herein.

By adopting the technical solution of this embodiment, after the first tab 221 is connected to the first wall portion 211, the first tab 221 abuts against the support protrusion 2113, and the first tab 221 is located outside the communication groove 2112, making it more difficult for the first tab 221 to enter the communication groove 2112 and seal the communication groove 2112. This improves the reliability of the communication groove 2112 in enabling communication between the first subspace 2102 and the second subspace 2103, further improving the operational reliability of the battery cell 20.

In another embodiment of this application, referring to FIG. 10 and FIG. 11, a depth of the communication groove 2112 is T₁, and a thickness of the first wall portion 211 is T₂, where 0.3 ≤ T₁/T₂ ≤ 0.6.

The first wall portion 211 is a plate-like structure, the first wall portion 211 has a first surface and a second surface distributed opposite each other along a thickness direction Z, the first surface faces the first tab 221, and the second surface faces away from the first tab 221.

A distance between the wall surface of the communication groove 2112 facing the first tab 221 and the first surface is the depth T₁ of the communication groove 2112. If the wall surface of the communication groove 2112 facing the first tab 221 is a flat surface, the depth T₁ of the communication groove 2112 is measured with reference to this flat surface; if the wall surface of the communication groove 2112 facing the first tab 221 is provided with a protrusion or a recess, the depth T₁ of the communication groove 2112 is measured with reference to a flat region of the wall surface of the communication groove 2112 facing the first tab 221; if the first surface is a flat surface, the depth T₁ of the communication groove 2112 is measured with reference to the first surface; and if the first surface is provided with a protrusion and the communication groove 2112 is disposed on the protrusion, the depth T₁ of the communication groove 2112 is measured with reference to a surface of the protrusion facing the first tab 221.

A distance between the first surface and the second surface is the thickness T₂ of the first wall portion 211; if the first surface and the second surface are flat surfaces, the thickness T₂ of the first wall portion 211 is measured with reference to the first surface and the second surface; and if the first surface and the second surface are provided with protrusions or recesses, the thickness T₂ of the first wall portion 211 is measured with reference to flat regions of the first surface and the second surface.

T₁/T₂ may be understood as a proportion of the communication groove 2112 in the thickness direction Z of the first wall portion 211.

By adopting the technical solution of this embodiment, the design of T₁/T₂ ≥ 0.3 ensures that the communication groove 2112 has a certain flow area, allowing the emission medium in the second subspace 2103 to easily enter the first subspace 2102 for emission, and providing a good pressure relief effect for the second subspace 2103, thereby enabling the first subspace 2102 and the second subspace 2103 to achieve balance quickly. In addition, the design of T₁/T₂ ≤ 0.6 ensures that the first wall portion 211 has a specific thickness at the communication groove 2112, providing the first wall portion 211 with a certain structural strength, thereby reducing the risk of damage to the first wall portion 211. Therefore, the design of 0.3 ≤ T₁/T₂ ≤ 0.6 enables the first wall portion 211 to balance the structural strength and flow area, helping to improve the operational reliability of the battery cell 20.

In another embodiment of this application, referring to FIG. 10 and FIG. 11, 0.4 ≤ T₁/T₂ ≤ 0.5.

By adopting the technical solution of this embodiment, the design of T₁/T₂ ≥ 0.4 ensures that the communication groove 2112 has an appropriate flow area, allowing the emission medium in the second subspace 2103 to quickly enter the first subspace 2102 for emission, and providing a better pressure relief effect for the second subspace 2103, thereby enabling the first subspace 2102 and the second subspace 2103 to achieve balance quickly. In addition, the design of T₁/T₂ ≤ 0.5 ensures that the first wall portion 211 has a more appropriate thickness at the communication groove 2112, providing the first wall portion 211 with good structural strength, thereby effectively reducing the risk of damage to the first wall portion 211. Therefore, the design of 0.4 ≤ T₁/T₂ ≤ 0.5 enables the first wall portion 211 to better balance the structural strength and flow area, helping to improve the operational reliability of the battery cell 20.

In one embodiment, the value of T₁/T₂ may be, but is not limited to, any one of 0.3, 0.35, 0.4, 0.45, 0.5, 0.55, and 0.6, or a value between any two of these values.

In another embodiment of this application, referring to FIG. 8 to FIG. 10, the first wall portion 211 is circular, a width of the communication groove 2112 is L, and a diameter of the first wall portion 211 is D, where 0 < L/D ≤ 0.1.

In the communication groove 2112, a minimum distance between two wall surfaces located on two opposite sides of the wall surface facing the first tab 221 is the width L of the communication groove 2112. As shown in FIG. 8, if the two wall surfaces are parallel, that is, the communication groove 2112 is rectangular, and the width L of the communication groove 2112 is measured with reference to any position of the two wall surfaces. As shown in FIG. 9 and FIG. 10, if the two wall surfaces form a certain angle, that is, the communication groove 2112 is fan-shaped, the width L of the communication groove 2112 is measured with reference to the minimum spacing between the two wall surfaces.

The first wall portion 211 is circular, the first wall portion 211 is placed between two parallel flat surfaces, and when the two flat surfaces both abut against the circumferential surface of the first wall portion 211, a distance between the two flat surfaces is the diameter D of the first wall portion 211.

0 < L/D ≤ 0.1. It can be understood that a larger diameter D of the first wall portion 211 indicates a larger volume of the electrode assembly 22, so that the electrode assembly 22 generates a larger amount of emission medium when there is thermal runaway, resulting in larger internal pressure of the battery cell 20. Accordingly, the width L of the communication groove 2112 may be set larger, and the flow area of the communication groove 2112 is increased accordingly, so that a large amount of emission medium in the second subspace 2103 can quickly flow into the first subspace 2102 through the communication groove 2112 and then be discharged through the pressure relief mechanism 23, thereby achieving a quick air pressure balance within the battery cell 20. Therefore, different communication grooves 2112 can be designed correspondingly according to the size of battery cells 20 to meet the pressure relief requirements of battery cells 20 of different sizes.

By adopting the technical solution of this embodiment, the design of 0 < L/D ≤ 0.1 ensures that a region of the first wall portion 211 provided with the communication groove 2112 is not excessively large, allowing the first wall portion 211 to maintain good structural strength, thereby helping to improve the operational reliability of the battery cell 20.

In another embodiment of this application, referring to FIG. 8 to FIG. 10, 0.001 ≤ L/D ≤ 0.05.

By adopting the technical solution of this embodiment, the design of L/D ≥ 0.001 ensures that, when the first wall portion 211 has a specified diameter D, the communication groove 2112 has an appropriate width L, and the communication groove 2112 has an appropriate flow area, enabling the second subspace 2103 to release pressure quickly; and the design of L/D ≤ 0.05 ensures that the region occupied by the communication groove 2112 on the first wall portion 211 is within an appropriate range, and the first wall portion 211 has an appropriate area for connection with the first tab 221, ensuring good connection reliability between the first tab 221 and the first wall portion 211, and also providing the first wall portion 211 with a more appropriate structural strength. Therefore, the design of 0.001 ≤ L/D ≤ 0.05 enables the first wall portion 211 to better balance the structural strength, connection strength, and flow area, effectively improving the operational reliability of the battery cell 20.

In one embodiment, the value of L/D may be, but is not limited to, any one of 0.0001, 0.001, 0.005, 0.01, 0.015, 0.02, 0.025, 0.03, 0.035, 0.04, 0.045, and 0.05, or a value between any two of these values.

In another embodiment of this application, referring to FIG. 10 and FIG. 11, a depth of the communication groove 2112 is T₁, where 0.1 mm ≤ T₁ ≤ 0.6 mm.

By adopting the technical solution of this embodiment, the design of T₁ ≥ 0.1 mm ensures that the communication groove 2112 has a specific flow area, allowing the emission medium in the second subspace 2103 to easily enter the first subspace 2102 for emission, and providing a good pressure relief effect for the second subspace 2103, thereby enabling the first subspace 2102 and the second subspace 2103 to achieve balance quickly. In addition, the design of T₁ ≤ 0.6 mm ensures that the communication groove 2112 does not extend through the first wall portion 211, allowing the first wall portion 211 to have a specific structural strength, thereby reducing the risk of damage to the first wall portion 211. Therefore, the design of 0.1 mm ≤ T₁ ≤ 0.6 mm enables the first wall portion 211 to balance the structural strength and flow area, helping to improve the operational reliability of the battery cell 20.

In another embodiment of this application, 0.3 mm ≤ T₁ ≤ 0.5 mm.

By adopting the technical solution of this embodiment, the design of T₁/T₂ ≥ 0.3 mm ensures that the communication groove 2112 has an appropriate flow area, allowing the emission medium in the second subspace 2103 to quickly enter the first subspace 2102 for emission, and providing a better pressure relief effect for the second subspace 2103, thereby enabling the first subspace 2102 and the second subspace 2103 to achieve balance quickly. In addition, the design of T₁/T₂ ≤ 0.5 mm ensures that the first wall portion 211 has a more appropriate thickness at the communication groove 2112, providing the first wall portion 211 with good structural strength, thereby effectively reducing the risk of damage to the first wall portion 211. Therefore, the design of 0.3 mm ≤ T₁ ≤ 0.5 mm enables the first wall portion 211 to better balance the structural strength and flow area, further improving the operational reliability of the battery cell 20.

In one embodiment, the value of T₁ may be, but is not limited to, any one of 0.1 mm, 0.15 mm, 0.2 mm, 0.25 mm, 0.3 mm, 0.35 mm, 0.4 mm, 0.45 mm, 0.5 mm, 0.55 mm, and 0.6 mm, or a value between any two of these values.

In another embodiment of this application, referring to FIG. 8 to FIG. 10, a width of the communication groove 2112 is L, where 0.3 mm ≤ L ≤ 20 mm.

By adopting the technical solution of this embodiment, the design of L ≥ 5 mm ensures that the communication groove 2112 has a specific width, and the communication groove 2112 has a specific flow area, enabling the second subspace 2103 to release pressure quickly; the design of L ≤ 20 mm ensures that a region occupied by the communication groove 2112 on the first wall portion 211 is within an appropriate range, and the first wall portion 211 has an appropriate area for connection with the first tab 221, ensuring good connection reliability between the first tab 221 and the first wall portion 211, and also providing the first wall portion 211 with good structural strength, thereby reducing the risk of damage to the first wall portion 211. Therefore, the design of 0.3 mm ≤ L ≤ 20 mm enables the first wall portion 211 to effectively balance the structural strength, connection strength, and flow area, effectively improving the operational reliability of the battery cell 20.

In another embodiment of this application, 5 mm ≤ L ≤ 10 mm.

By adopting the technical solution of this embodiment, the design of L ≥ 5 mm ensures that the communication groove 2112 has an appropriate width, and the communication groove 2112 has an appropriate flow area, enabling the second subspace 2103 to release pressure more quickly; the design of L ≤ 10 mm ensures that a region occupied by the communication groove 2112 on the first wall portion 211 is within a more appropriate range, and the first wall portion 211 has a more appropriate area for connection with the first tab 221, ensuring better connection reliability between the first tab 221 and the first wall portion 211, and also providing the first wall portion 211 with better structural strength, thereby reducing the risk of damage to the first wall portion 211. Therefore, the design of 5 mm ≤ L ≤ 10 mm enables the first wall portion 211 to better balance the structural strength, connection strength, and flow area, effectively improving the operational reliability of the battery cell 20.

In one embodiment, the value of L may be, but is not limited to, any one of 0.3 mm, 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, and 20 mm, or a value between any two of these values.

In another embodiment of this application, referring to FIG. 8 FIG. 10, there are multiple communication channels 2111, and the multiple communication channels 2111 are distributed at intervals along a circumferential direction Y of the first tab 221.

There are two or more communication channels 2111, and the multiple communication channels 2111 are distributed at intervals along the circumferential direction Y of the first tab 221.

In an example, the communication channel 2111 is a communication groove 2112. As shown in FIG. 8 and FIG. 10, there are three communication grooves 2112, and the three communication grooves 2112 are uniformly distributed at intervals along the circumferential direction Y of the first tab 221. As shown in FIG. 9, there are two communication grooves 2112, and the two communication grooves 2112 are uniformly distributed at intervals along the circumferential direction Y of the first tab 221.

By adopting the technical solution of this embodiment, the first subspace 2102 and the second subspace 2103 communicate with each other through multiple communication channels 2111, allowing the emission medium in the second subspace 2103 to be discharged through the multiple communication channels 2111, which facilitates rapid internal pressure balance in the battery cell 20. Additionally, the multiple communication channels 2111 are distributed at intervals along the circumferential direction Y of the first tab 221, enabling the emission medium at any position in the second subspace 2103 to quickly reach the communication channels 2111, achieving timely discharge of the emission medium in the second subspace 2103 and effectively improving the operational reliability of the battery cell 20.

Under some conditions, along the circumferential direction of the first tab 221, the first tab 221 and the first wall portion 211 are welded along the whole circumference; however, during the welding process, the spacing between the first tab 221 and the first wall portion 211 accumulates and increases gradually with welding, resulting in poor welding quality between the first tab 221 and the first wall portion 211.

In another embodiment of this application, referring to FIG. 7 and FIG. 8, the first tab 221 is welded to the first wall portion 211 to form a first weld structure W1; and a projection of the first weld structure W1 along a first direction and a projection of the communication channel 2111 along the first direction do not overlap or partially overlap, where the first direction is a distribution direction of the first tab 221 and the first wall portion 211.

The first tab 221 is welded to the first wall portion 211. It can be understood that the first tab 221 can be directly welded to the first wall portion 211. In an example, during welding, laser acts on a surface of the first wall portion 211 facing away from the first tab 221 to melt the materials of the first wall portion 211 and the first tab 221, and after the materials are cooled and solidified, the first tab 221 and the first wall portion 211 are welded together, where a structure formed after the materials are molten, cooled, and solidified is the first weld structure W1. The first weld structure W1 serves as the connection structure W formed by the first tab 221 and the first wall portion 211. In the battery cell 20, a region on an inner side of the first weld structure W1 is the first subspace 2102, and a region on an outer side of the first weld structure W1 is the second subspace 2103.

The first tab 221 and the first wall portion 211 are arranged along a thickness direction of the first wall portion 211, and the thickness direction Z of the first wall portion 211 is parallel to the first direction.

The projection of the first weld structure W1 along the first direction and the projection of the communication channel 2111 along the first direction do not overlap or partially overlap. It can be understood that along the circumferential direction Y of the first tab 221, the first tab 221 and the first wall portion 211 are welded in a segmented manner, avoiding at least a portion of the communication channel 2111, that is, the portion of the first wall portion 211 provided with the communication channel 2111 and the portion of the first wall portion 211 provided with the first weld structure W1 may partially overlap or may not overlap at all. The first weld structure W1 may be a segmented structure along the circumferential direction Y of the first tab 221, and segmented positions of the first weld structure W1 correspond to the communication channel 2111, where the positions of the first weld structure W1 corresponding to the communication channel 2111 are all in a segmented state, and other positions of the first weld structure W1 may also be in a segmented state.

By adopting the technical solution of this embodiment, the first tab 221 is directly welded to the first wall portion 211, simplifying the assembly operation of the battery cell 20. Additionally, the projection of the first weld structure W1 along the first direction and the projection of the communication channel 2111 along the first direction do not overlap or partially overlap, enabling segmented welding of the first tab 221 and the first wall portion 211. On one hand, the welding can avoid at least a portion of the communication channel 2111, ensuring that the first weld structure W1 does not seal the communication channel 2111, thus enabling communication between the first subspace 2102 and the second subspace 2103. On the other hand, a spacing generated between the first tab 221 and the first wall portion 211 by previous segment welding does not accumulate in subsequent segment welding, reducing spacing accumulation between the first tab 221 and the first wall portion 211, improving the welding quality of the first weld structure W1, and improving the operational reliability of the battery cell 20.

In some battery cells 20, after the first tab 221 is flattened, the surface of the first tab 221 is uneven, making it difficult for the first wall portion 211 to closely fit with the first tab 221, so that microcracks may be generated in the first wall portion 211 after the first tab 221 and the first wall portion 211 are welded, leading to sealing failure of the housing 21 and affecting the operational reliability of the battery cell 20.

In another embodiment of this application, referring to FIG. 6 and FIG. 8, the battery cell 20 further includes a first current collector 24 located between the first tab 221 and the first wall portion 211, the first current collector 24 is connected to the first tab 221, the first current collector 24 is welded to the first wall portion 211 to form a second weld structure W2, and a projection of the second weld structure W2 along the first direction and a projection of the communication channel 2111 along the first direction do not overlap or partially overlap, where the first direction is a distribution direction of the first tab 221 and the first wall portion 211.

The first current collector 24 may refer to a component connected between the first wall portion 211 and the first tab 221, and the first current collector 24 is made of a conductive material such as copper or aluminum to achieve electrical connection between the first tab 221 and the first wall portion 211. The first current collector 24 is a plate-like structure, and the first current collector 24 is adapted to the first tab 221 in shape. In an example, when the first tab 221 is cylindrical, the first current collector 24 is circular.

The first current collector 24 is located between the first wall portion 211 and the first tab 221, one side of the first current collector 24 is connected to the first tab 221 to achieve electrical connection between the first current collector 24 and the first tab 221, and the other side of the first current collector 24 is connected to the first wall portion 211 by welding to achieve electrical connection between the first tab 221 and the first wall portion 211.

During the assembly process of the battery cell 20, the first current collector 24 is first connected to the first tab 221, and then the first wall portion 211 is welded to the first current collector 24. During the welding process, a structure formed after the materials of the first wall portion 211 and the first current collector 24 are molten, cooled, and solidified is the second weld structure W2. The first current collector 24 and the first tab 221 may be connected by welding, adhesion, or other methods.

Under a condition that the first current collector 24 is welded to the first tab 221, the first current collector 24 is welded to the first tab 221 to form a third weld structure W3, and the second weld structure W2 and the third weld structure W3 may be located at the same position or may be staggered from each other. The third weld structure W3 serves as the connection structure W formed by the first tab 221 and the first wall portion 211. In the battery cell 20, a region on an inner side of the second weld structure W2 is the first subspace 2102, and a region on an inner side of the second weld structure W2 is the second subspace 2103.

The projection of the second weld structure W2 along the first direction and the projection of the communication channel 2111 along the first direction do not overlap or partially overlap. It can be understood that along the circumferential direction Y of the first tab 221, the first current collector 24 and the first wall portion 211 are welded in a segmented manner to avoid at least a portion of the communication channel 2111, that is, the portion of the first wall portion 211 provided with the communication channel 2111 and the portion of the first wall portion 211 provided with the first weld structure W1 may partially overlap or may not overlap at all. The second weld structure W2 may be a segmented structure along the circumferential direction Y of the first tab 221, and the segmented positions of the second weld structure W2 correspond to the communication channel 2111, where the positions of the second weld structure W2 corresponding to the communication channel 2111 are all in a segmented state, and other positions of the second weld structure W2 may also be in a segmented state.

By adopting the technical solution of this embodiment, the first wall portion 211 is connected to the first tab 221 through the first current collector 24, and the first wall portion 211 can be closely welded to the first current collector 24, reducing the risk of generation of microcracks in the first wall portion 211, ensuring good airtightness of the housing 21, and achieving good operational reliability of the battery cell 20. Additionally, the first current collector 24 is welded to the first tab 221, so that even when microcracks occur in the first current collector 24, the airtightness of the housing 21 remains unaffected. Furthermore, similarly, the projection of the second weld structure W2 along the first direction and the projection of the communication channel 2111 along the first direction do not overlap or partially overlap, enabling segmented welding of the first current collector 24 and the first wall portion 211. On one hand, the welding can avoid at least a portion of the communication channel 2111, ensuring that the second weld structure W2 does not seal the communication channel 2111, thus enabling communication between the first subspace 2102 and the second subspace 2103. On the other hand, a spacing generated between the first current collector 24 and the first wall portion 211 by previous segment welding does not accumulate in subsequent segment welding, reducing spacing accumulation between the first current collector 24 and the first wall portion 211, improving the welding quality of the second weld structure W2, and improving the operational reliability of the battery cell 20.

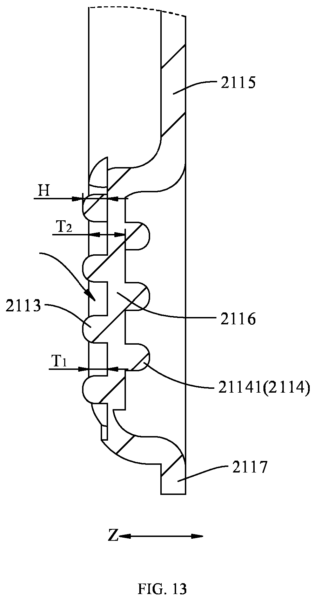

In another embodiment of this application, referring to FIG. 13, a surface of the first wall portion 211 facing away from the first tab 221 is provided with an identification structure 2114, and the identification structure 2114 is configured to indicate a position of the communication channel 2111.

The identification structure 2114 may refer to a structure disposed on the surface of the first wall portion 211 facing away from the first tab 221 and configured to indicate the position of the communication channel 2111. The identification structure may be disposed opposite the communication channel 2111, enabling the identification structure to clearly show the position of the communication channel 2111. Alternatively, the identification structure may be disposed opposite the communication channel 2111 and staggered from the communication channel 2111, for example, the identification structure is an arrow, and the arrow points to the position of the communication channel 2111.

By adopting the technical solution of this embodiment, during a welding process of the first wall portion 211 and the first current collector 24 or the first tab 221, the welding can avoid the communication channel 2111 according to the identification structure 2114, reducing the risk of the communication channel 2111 being sealed, ensuring reliable and stable communication between the first subspace 2102 and the second subspace 2103, improving the promptness of pressure relief in the battery cell 20, and improving the operational reliability of the battery cell 20.

In another embodiment of this application, referring to FIG. 13, the identification structure 2114 includes at least one of an identification protrusion 21141, an identification groove, a sticker, and a stamp.

It can be understood that the identification structure 2114 includes any one of an identification protrusion 21141, an identification groove, a sticker, and a stamp, or the identification structure 2114 includes any two of an identification protrusion 21141, an identification groove, a sticker, and a stamp, or the identification structure 2114 includes any three of an identification protrusion 21141, an identification groove, a sticker, and a stamp, or the identification structure 2114 includes an identification protrusion 21141, an identification groove, a sticker, and a stamp. The identification protrusion 21141 herein may refer to a protruding structure formed by protruding of the surface of the first wall portion 211 facing away from the first tab 221, and the identification protrusion 21141 may be disposed opposite the support protrusion 2113 and located on two opposite sides of the first wall portion 211. The identification groove may refer to a groove structure formed by recessing the surface of the first wall portion 211 facing away from the first tab 221, and the identification groove may be disposed opposite the support protrusion 2113 and located on two opposite sides of the first wall portion 211. The sticker may refer to an identification paper adhered to the surface of the first wall portion 211 facing away from the first tab 221, and the sticker may be adapted to the communication channel 2111 in shape to better indicate the position of the communication channel 2111. For example, the sticker may be a strip sticker, a circular sticker, a fan-shaped sticker, or the like. The stamp may refer to a mark left by embossing on the surface of the first wall portion 211 facing away from the first tab 221.

By adopting the technical solution of this embodiment, the identification structure 2114 can be flexibly configured to meet different production requirements.

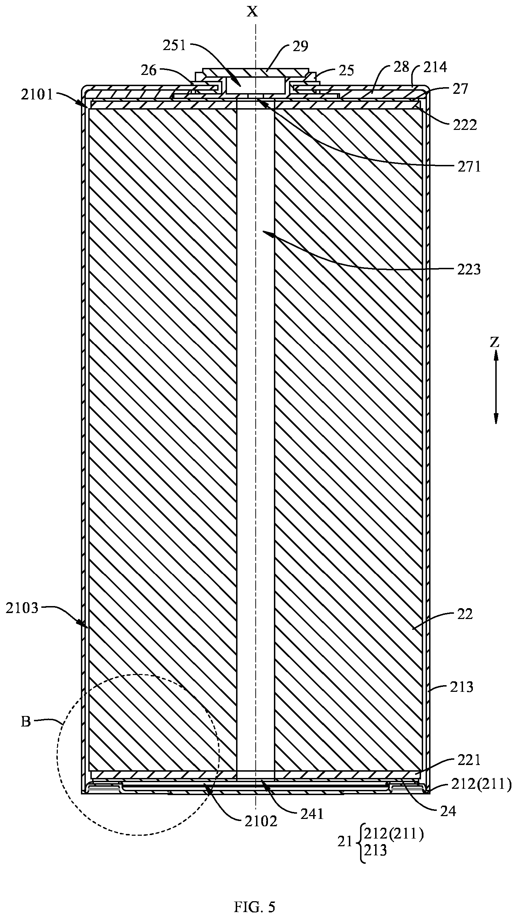

In another embodiment of this application, referring to FIG. 5 to FIG. 7, the first wall portion 211 includes a body 2115 and a protrusion 2116 connected to the body 2115, the protrusion 2116 protrudes from a surface of the body 2115 facing the first tab 221, and the protrusion 2116 is arranged around the body 2115. The communication channel 2111 is disposed on the protrusion 2116, the pressure relief mechanism 23 is disposed on the body 2115, the protrusion 2116 abuts against and is connected to the first tab 221, a pressure relief gap 2104 communicating with the communication channel 2111 is formed between the body 2115 and the first tab 221, and the pressure relief gap 2104 is located in the first subspace 2102.

The body 2115 may refer to a body portion of the first wall portion 211, the pressure relief mechanism 23 is disposed on the body 2115, the pressure relief mechanism 23 and the body 2115 may form an integrated structure or may be separate structures, and the pressure relief mechanism 23 may be installed on the body 2115.

The protrusion 2116 may refer to a portion of the first wall portion 211 that protrudes from a surface of the body 2115 facing the first tab 221, the protrusion 2116 is annular, and the protrusion is arranged around an outer side of the body 2115. When the first tab 221 abuts against and is connected to a surface of the protrusion 2116 facing the first tab 221, the space inside the protrusion 2116 forms the pressure relief gap 2104, and the pressure relief gap 2104 is located between the first tab 221 and the body 2115.

In an example, referring to FIG. 7, under a condition that the first tab 221 is directly welded to the protrusion 2116, the first tab 221 abuts against and is welded to the surface of the protrusion 2116 protruding from the body 2115 facing the first tab 221, the protrusion 2116 lifts the first tab 221, and the pressure relief gap 2104 is formed between the first tab 221 and the body 2115. Referring to FIG. 5 and FIG. 6, under a condition that the protrusion 2116 is welded to the first current collector 24, the first current collector 24 abuts against and is welded to the surface of the protrusion 2116 protruding from the body 2115 facing the first tab 221, the protrusion 2116 lifts the first current collector 24, and the pressure relief gap 2104 is formed between the body 2115 and the first current collector 24.

The pressure relief gap 2104 is also a portion of the first subspace 2102, and the pressure relief mechanism 23 is located at the body 2115, allowing the emission medium in the pressure relief gap 2104 to be directly discharged quickly through the pressure relief mechanism 23, thereby achieving release of the internal pressure of the pressure relief gap 2104. The communication channel 2111 is located at the protrusion 2116, so that one end of the communication channel 2111 directly communicates with the second subspace 2103, and the other end of the communication channel 2111 directly communicates with the pressure relief gap 2104, enabling the emission medium in the second subspace 2103 to enter the pressure relief gap 2104 through the communication channel 2111 and then be discharged through the pressure relief mechanism 23.

By adopting the technical solution of this embodiment, after the emission medium in the second subspace 2103 enters the pressure relief gap 2104 through the communication channel 2111, the emission medium can quickly flow to the pressure relief mechanism 23 through the pressure relief gap 2104 and ultimately be discharged through the pressure relief mechanism 23, enabling faster internal pressure balance in the battery cell 20 and improving the operational reliability of the battery cell 20. Additionally, the pressure relief gap 2104 can provide actuation space for the pressure relief mechanism 23, allowing the pressure relief mechanism 23 to actuate promptly for pressure relief, thereby improving the promptness of pressure relief in the battery cell 20.

In one embodiment, the first wall portion 211 further includes an extension portion 2117, the extension portion 2117 is arranged around a side of the protrusion 2116 facing away from the body 2115, the extension portion 2117 covers an end surface of the shell 213 to seal an opening of the shell 213, and the extension portion 2117 and the shell 213 may be hermetically connected by welding, flanging, or other methods.

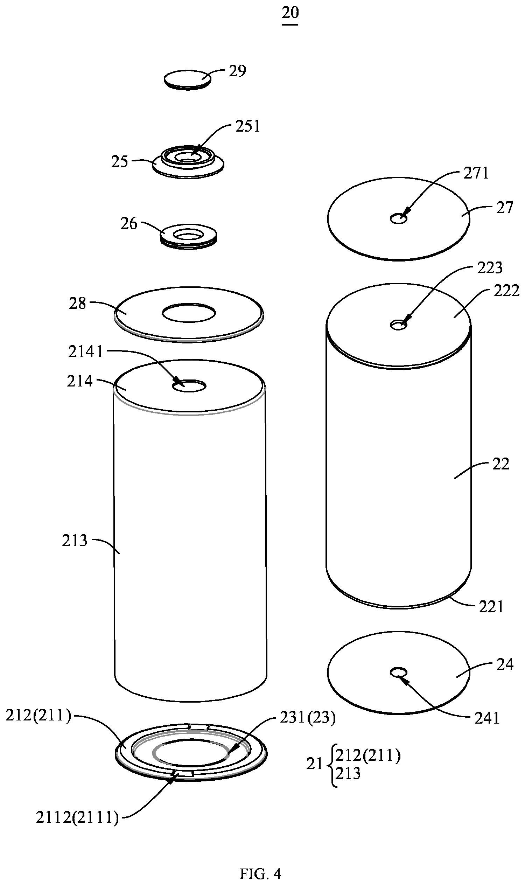

In another embodiment of this application, referring to FIG. 4 and FIG. 5, the housing 21 includes a shell 213 and an end cover 212, the end cover 212 covers an opening of the shell 213, and the end cover 212 and the shell 213 jointly enclose the accommodation space 2101. The end cover 212 is the first wall portion 211; or, a wall portion of the shell 213 is the first wall portion 211.

The shell 213 may be a hollow structure with an opening at one end, the end cover 212 covers the opening at the end portion of the shell 213 to seal the shell 213, and the shell 213 and the end cover 212 jointly enclose the accommodation space 2101. The end cover 212 and the shell 213 may be connected by welding, flanging, or other methods to encapsulate the electrode assembly 22 within the accommodation space 2101.

In an example, the end cover 212 is the first wall portion 211, that is, the first tab 221 is connected to the end cover 212, and the communication groove 2112 is disposed on the end cover 212. The end cover 212 is a plate-like structure made by processing a sheet material. If a surface of the end cover 212 facing the first tab 221 is a flat surface, the flat process can be directly processed to form the communication groove 2112. If the surface of the end cover 212 facing the first tab 221 is provided with a protrusion, a surface of the protrusion facing the first tab 221 can be processed to form the communication groove 2112. An operation space for forming the communication groove 2112 on the end cover 212 is large, which helps to improve the production efficiency. Certainly, in other embodiments, similarly, the first wall portion 211 may be a wall portion of the shell 213.

By adopting the technical solution of this embodiment, the electrode assembly 22 can be placed into the shell 213 through the opening of the shell 213, and the opening of the shell 213 can be sealed using the end cover 212. In this way, the electrode assembly 22 is encapsulated within the housing 21. The assembly operation is simple, helping to improve the production and manufacturing efficiency of the battery cell 20.

In another embodiment of this application, referring to FIG. 4 and FIG. 5, the electrode assembly 22 further includes a second tab 222, the second tab 222 is located on a side of the electrode assembly 22 facing away from the first wall portion 211, and a polarity of the first tab 221 is opposite to a polarity of the second tab 222. The battery cell 20 further includes an electrode terminal 25 and a first insulating member 26. The housing 21 includes a second wall portion 214 disposed opposite the first wall portion 211, the second wall portion 214 is provided with an electrode lead-out hole 2141 communicating with the accommodation space 2101, the first insulating member 26 sleeves an outer side of the electrode terminal 25, the first insulating member 26 passes through the electrode lead-out hole 2141 to insulate and separate the electrode terminal 25 from the housing 21, and the second tab 222 is connected to the electrode terminal 25 to achieve electrical connection between the second tab 222 and the electrode terminal 25.

The second tab 222 may refer to a tab disposed at an end portion of the electrode assembly 22 facing away from the first tab 221; the polarity of the first tab 221 is opposite to the polarity of the second tab 222; one of the first tab 221 and the second tab 222 is a positive electrode tab; and the other is a negative electrode tab.

The electrode terminal 25 may refer to a component electrically connected to the second tab 222 for outputting or inputting electrical energy of the battery cell 20, and the electrode terminal 25 is made of a conductive material to achieve input and output of electrical energy. The electrode terminal 25 may be made of a material which includes, but is not limited to, copper and aluminum. The shape of the electrode terminal 25 may include, but is not limited to, a cylindrical shape and a prismatic shape.

The first insulating member 26 may refer to a component configured to insulate the electrode terminal 25 from the housing 21, the first insulating member 26 is made of an insulating material to meet insulation requirements, and the insulating material may be plastic, rubber, or the like. Since the first tab 221 is connected to the housing 21, the first tab 221 and the housing 21 carry the same charge. In addition, since the second tab 222 is connected to the electrode terminal 25, the electrode terminal 25 and the second tab 222 carry the same charge. However, the first insulating member 26 insulates and separates the electrode terminal 25 from the housing 21, achieving insulation between the first tab 221 and the second tab 222, thereby reducing the risk of short circuits.

The second wall portion 214 may refer to a wall portion of the housing 21 disposed opposite the first wall portion 211; and the second wall portion 214 may be the end cover 212 or may be a wall portion of the shell 213. In an example, the first wall portion 211 is the end cover 212, and the second wall portion 214 is a wall portion of the shell 213 disposed opposite the end cover 212. Alternatively, the first wall portion 211 and the second wall portion 214 are respectively two wall portions of the shell 213 disposed opposite each other.

The electrode lead-out hole 2141 may refer to a through hole provided in the second wall portion 214 for communicating with the accommodation space 2101, and the electrode terminal 25 can extend out of the electrode lead-out hole 2141 to input or output electrical energy of the battery cell 20.

The first insulating member 26 sleeves an outer side of the electrode terminal 25, and the first insulating member 26 passes through the electrode lead-out hole 2141, so that the electrode terminal 25 and the periphery of the electrode lead-out hole 2141 are insulated and separated by the first insulating member 26, achieving insulation and separation between the electrode terminal 25 and the housing 21. In an example, an outer circumferential side of the electrode terminal 25 is provided with an installation groove, the first insulating member 26 is installed in the installation groove, a circumferential side of the first insulating member 26 facing away from the electrode assembly 22 is provided with a fixing groove, and the periphery of the electrode lead-out hole 2141 is inserted into the fixing groove to achieve insulation and separation between the electrode terminal 25 and the second wall portion 214.

By adopting the technical solution of this embodiment, the housing 21 serves as one output pole of the battery cell 20, and the electrode terminal 25 serves as another output pole of the battery cell 20. The housing 21 and the electrode terminal 25 can be connected to an external circuit to enable charging and discharging of the battery cell 20.

In another embodiment of this application, referring to FIG. 4 and FIG. 5, the electrode assembly 22 further includes a second current collector 27 and a second insulating member 28, and the second current collector 27 is connected between the second tab 222 and the electrode terminal 25 to achieve electrical connection between the second tab 222 and the electrode terminal 25. At least a portion of the second insulating member 28 is located between the second current collector 27 and the second wall portion 214.

The second current collector 27 may refer to a component connected between the electrode terminal 25 and the second tab 222. The second current collector 27 and the second tab 222 as well as the second current collector 27 and the electrode terminal 25 may be connected by welding, adhesion, or other methods to achieve electrical connection between the electrode terminal 25 and the second tab 222. The second current collector 27 is made of a conductive material such as copper or aluminum to meet conductivity requirements. The second current collector 27 and the first current collector 24 may be made of the same material or different materials. The second current collector 27 is a plate-like structure, and the second current collector 27 is adapted to the second tab 222 in shape. For example, when the second tab 222 is circular, the second current collector 27 is circular. The structure of the second current collector 27 may be the same as or different from the structure of the first current collector 24.

The second insulating member 28 may refer to a component located between the second current collector 27 and the second wall portion 214, and the second insulating member 28 is made of an insulating material such as plastic or rubber. The first insulating member 26 and the second insulating member 28 may be made of the same material. The second insulating member 28 is clamped between the second current collector 27 and the second wall portion 214 to achieve insulation between the second current collector 27 and the housing 21. The second insulating member 28 may be entirely clamped between the second current collector 27 and the second wall portion 214. Alternatively, a portion of the second insulating member 28 may be clamped between the second current collector 27 and the second wall portion 214, and another portion may be clamped between the electrode terminal 25 and the first wall portion 211. For example, the second insulating member 28 is located in the accommodation space 2101, the second insulating member 28 sleeves the electrode terminal 25, an inner circumferential side of the second insulating member 28 is clamped between the electrode terminal 25 and the second wall portion 214, and an outer circumferential side of the second insulating member 28 is clamped between the electrode terminal 25 and the second current collector 27 to completely insulate and separate the electrode terminal 25 and the second current collector 27 from the housing 21. Certainly, the second insulating member 28 may alternatively be entirely clamped between the second current collector 27 and the second wall portion 214.

By adopting the technical solution of this embodiment, the second tab 222 and the electrode terminal 25 are connected through the second current collector 27, and the second current collector 27 can support the second tab 222 and the electrode terminal 25, improving the connection stability between the second tab 222 and the electrode terminal 25, and helping to improve the operational reliability of the battery cell 20. Additionally, the second insulating member 28 can insulate and separate the second current collector 27 from the housing 21, reducing the risk of short circuits.

In another embodiment of this application, referring to FIG. 4 and FIG. 5, the battery cell 20 further includes a sealing member 29, the electrode terminal 25 is provided with an electrolyte injection hole 251 communicating with the accommodation space 2101, and the sealing member 29 covers an opening of the electrolyte injection hole 251 facing away from the electrode assembly 22 to seal the electrolyte injection hole 251.

The electrolyte injection hole 251 may refer to a through hole in the electrode terminal 25 communicating with the accommodation space 2101, the electrolyte injection hole 251 enables communication between the exterior of the battery cell 20 and the accommodation space 2101 to allow the electrolyte to be injected into the accommodation space 2101. For example, the electrolyte injection hole 251 may extend through the electrode terminal 25 along an axis of the electrode terminal 25.

The sealing member 29 may refer to a component for sealing the electrolyte injection hole 251. After electrolyte injection is completed, the sealing member 29 seals and covers the opening of the electrolyte injection hole 251 facing away from the electrode assembly 22, so that the electrolyte injection hole 251 is sealed, reducing the risk of electrolyte leakage in the battery cell 20. The sealing member 29 may be made of a material such as stainless steel, galvanized steel, copper, or aluminum. The sealing member 29 may be in a structural form of a stud, a sealing nail, or the like, and the sealing member 29 may seal the electrolyte injection hole 251 by welding, press-fitting, adhesion, or other methods.

By adopting the technical solution of this embodiment, the provision of the electrolyte injection hole 251 enables electrolyte injection into the battery cell 20, and the sealing member 29 can seal the electrolyte injection hole 251, reducing the risk of electrolyte leakage.

In one embodiment, referring to FIG. 4 and FIG. 5, under a condition that the electrode assembly 22 is a wound structure, the electrode assembly 22 has a central hole 223 at its center, the central hole 223 is formed after a winding needle is withdrawn from the electrode assembly 22, and the electrolyte injection hole 251 extends through the electrode terminal 25 and is disposed coaxial to the central hole 223. A position of the first current collector 24 facing the electrolyte injection hole 251 is provided with a first communication hole 241, and the first communication hole 241 enables communication between the electrolyte injection hole 251 and the central hole 223. A position of the second current collector 27 facing the central hole 223 is provided with a second communication hole 271, and the second communication hole 271 enables communication between the central hole 223 and the pressure relief gap 2104.

During an electrolyte injection process, after the electrolyte is injected through the electrolyte injection hole 251, the electrolyte flows into the central hole 223 through the first communication hole 241 under the action of its own gravity and infiltrates the electrode assembly 22 from the center of the electrode assembly 22 through the central hole 223, providing a good infiltration effect for the electrode assembly 22. In addition, the electrolyte can also enter the pressure relief gap 2104 through the second communication hole 271 so as to flow to the bottom of the electrode assembly 22, and thus the electrolyte provides better infiltration for the electrode assembly 22.

The following describes the battery cell 20 of this application with reference to some embodiments.

### Embodiment 1

In this embodiment, referring to FIG. 3 to FIG. 6 and FIG. 8, the battery cell 20 includes a housing 21, an electrode assembly 22, and a pressure relief mechanism 23. The housing 21 includes an accommodation space 2101 and a first wall portion 211. The electrode assembly 22 is located within the accommodation space 2101. The electrode assembly 22 includes a first tab 221. The first tab 221 is located on a side of the electrode assembly 22 facing the first wall portion 211, the first tab 221 is connected to the first wall portion 211, and a first subspace 2102 and a second subspace 2103 are formed within the accommodation space 2101. The pressure relief mechanism 23 is disposed at the housing 21, and the pressure relief mechanism 23 is configured to actuate when an internal pressure of the first subspace 2102 reaches a threshold to release the internal pressure of the first subspace 2102. The first wall portion 211 is provided with a communication channel 2111, and the communication channel 2111 enables communication between the first subspace 2102 and the second subspace 2103.

In this embodiment, the housing 21 includes an end cover 212 and a housing 21. The shell 213 is a hollow component with an opening at one end, and the end cover 212 covers the opening at the end portion of the shell 213 to enclose the accommodation space 2101. The end cover 212 is the first wall portion 211. The end cover 212 includes a body 2115 and a protrusion 2116. The protrusion 2116 protrudes from a surface of the body 2115 facing the first tab 221, and the protrusion 2116 is arranged around an outer circumferential side of the body 2115.

In this embodiment, the battery cell 20 further includes a first current collector 24. The communication channel 2111 is provided with a communication groove 2112 on a surface of the protrusion 2116 facing the first tab 221. One side of the first current collector 24 abuts against and is welded to a portion of the protrusion 2116 that is not provided with the communication groove 2112, to form a second weld structure W2, and the second weld structure W2 is a multi-segment structure around a central axis X of the electrode assembly 22. The other side of the first current collector 24 abuts against and is welded to the first tab 221 to form a third weld structure W3, the second weld structure W2 and the third weld structure W3 are staggered from each other, and the third weld structure W3 and the second weld structure W2 are closer to the central axis X of the electrode assembly 22. Within the accommodation space 2101, a region on an inner side of the second weld structure W2 is the first subspace 2102, and a region on an outer side of the second weld structure W2 is the second subspace 2103. A gap between the first current collector 24 and the body 2115 forms a pressure relief gap 2104, the pressure relief gap 2104 is located on the inner side of the protrusion 2116 and also on the inner side of the second weld structure W2, and the pressure relief gap 2104 is a portion of the first subspace 2102.

In this embodiment, the communication groove 2112 is a rectangular groove extending through the protrusion 2116 along a radial direction of the first tab 221. There are three communication grooves 2112, and the three communication grooves 2112 are uniformly arranged at intervals along a circumferential direction Y of the first tab 221. Correspondingly, the second weld structure W2 is divided into three segments, and each segment of the weld structure is located between two adjacent communication grooves 2112.

In this embodiment, with reference to the figure, the pressure relief mechanism 23 is disposed at the body 2115, and the pressure relief mechanism 23 is an annular groove 231 formed on a surface of the body 2115 facing the first tab 221.

In this embodiment, the end cover 212 further includes an extension portion 2117, the extension portion 2117 is arranged around an outer side of the protrusion 2116 facing away from the body 2115, and the extension portion 2117 is welded to the opening of the shell 213.

In this embodiment, the battery cell 20 further includes a second current collector 27, an electrode terminal 25, a first insulating member 26, and a second insulating member 28. The electrode assembly 22 further includes a second tab 222, the second tab 222 is located at an end portion of the electrode assembly 22 facing away from the first tab 221, and a polarity of the first tab 221 is opposite to a polarity of the second tab 222. A wall portion of the shell 213 disposed opposite the end cover 212 is the second wall portion 214, the second wall portion 214 is provided with an electrode lead-out hole 2141, one side of the second current collector 27 is connected to the second tab 222, the other side of the second current collector 27 is connected to the electrode terminal 25, the electrode terminal 25 is sleeved with the first insulating member 26, and the first insulating member 26 passes through the electrode lead-out hole 2141 to insulate and separate the electrode terminal 25 from the second wall portion 214. A portion of the second insulating member 28 is located between the second current collector 27 and the second wall portion 214, and another portion of the second insulating member 28 is located between the electrode terminal 25 and the second wall portion 214, to achieve insulation and separation between the electrode terminal 25 and the second wall portion 214 as well as insulation and separation between the second current collector 27 and the second wall portion 214.

In this embodiment, the electrode terminal 25 is provided with an electrolyte injection hole 251. The electrode assembly 22 includes a central hole 223 at its center, and the central hole 223 is formed after a winding needle is withdrawn from the electrode assembly 22. The electrolyte injection hole 251 extends through the electrode terminal 25 and is disposed coaxial to the central hole 223. A position of the first current collector 24 facing the electrolyte injection hole 251 is provided with a first communication hole 241, and the first communication hole 241 enables communication between the electrolyte injection hole 251 and the central hole 223. A position of the second current collector 27 facing the central hole 223 is provided with a second communication hole 271, and the second communication hole 271 enables communication between the central hole 223 and the pressure relief gap 2104. An opening of the electrolyte injection hole 251 facing away from the second tab 222 is covered with a sealing member 29, so that the electrolyte injection hole 251 is sealed.

### Embodiment 2

This embodiment differs from Embodiment 1 in that, referring to FIG. 7, the battery cell 20 does not include the first current collector 24, and the first tab 221 is directly welded to the protrusion 2116 to form the first weld structure W1.

### Embodiment 3

This embodiment differs from Embodiment 1 in that, referring to FIG. 9, the communication groove 2112 is a fan-shaped groove extending through the protrusion 2116 along the radial direction of the first tab 221, there are two communication grooves 2112, the two communication grooves 2112 are uniformly arranged at intervals along the circumferential direction Y of the first tab 221, and correspondingly, the second weld structure W2 is divided into two segments, with each segment of the weld structure being located between two adjacent communication grooves 2112.

### Embodiment 4

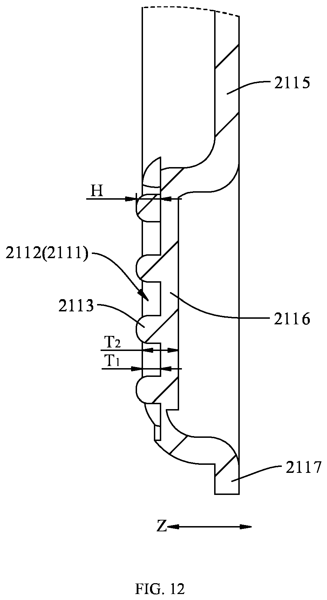

This embodiment differs from Embodiment 3 in that, referring to FIG. 10 to FIG. 12, the communication groove 2112 is a fan-shaped groove extending through the protrusion 2116 along the radial direction of the first tab 221, there are three communication grooves 2112, the three communication grooves 2112 are uniformly arranged at intervals along the circumferential direction Y of the first tab 221, and correspondingly, the second weld structure W2 is divided into three segments, with each segment of the weld structure being located between two adjacent communication grooves 2112.

In this embodiment, a wall surface of the communication groove 2112 facing the first tab 221 is provided with a support protrusion 2113, the support protrusion 2113 is configured to support the first current collector 24 and prevent the first current collector 24 from entering the communication groove 2112, reducing the risk of the communication groove 2112 being sealed. There are multiple support protrusions 2113, and the multiple support protrusions 2113 are uniformly distributed at intervals on the wall surface of the communication groove 2112 facing the first tab 221.

### Embodiment 5

This embodiment differs from Embodiment 4 in that, referring to FIG. 13, a surface of the protrusion 2116 facing away from the first tab 221 is provided with an identification structure 2114, the identification structure 2114 is configured to indicate a position of the communication groove 2112, the identification structure 2114 is an identification protrusion 21141 formed on a surface of the protrusion 2116 facing away from the first tab 221, the identification protrusion 21141 is disposed opposite the communication groove 2112, there are multiple identification protrusions 21141, and the multiple identification protrusions 21141 are uniformly distributed at intervals on the surface of the protrusion 2116 facing away from the first tab 221.

In another embodiment of this application, a battery 1100 is provided, including the battery cell 20 according to the above embodiments.

The battery 1100 of this embodiment of this application adopts the above battery cell 20, where the battery cell 20 has good operational reliability, which improves the operational reliability and performance of the battery 1100.

In another embodiment of this application, an electric apparatus is provided, including the battery 1100 according to the above embodiments.

The electric apparatus of this embodiment of this application adopts the above battery 1100, where the battery 1100 has good operational reliability and performance, which improves the operational reliability and performance of the electric apparatus.

The descriptions of the various embodiments above tend to emphasize the differences between the embodiments, and their similarities or identical aspects can be referenced mutually, which are not repeated herein for brevity.

In conclusion, it should be noted that the above embodiments are only used to illustrate the technical solutions of this application and not to limit them; although this application has been described in detail with reference to the foregoing embodiments, those of ordinary skill in the art should understand that they can still modify the technical solutions described in the foregoing embodiments or make equivalent substitutions for some or all of the technical features; and these modifications or substitutions do not make the essence of the corresponding technical solutions depart from the scope of the technical solutions of the embodiments of this application, and they should all be covered within the scope of the claims and specification of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A battery cell, **characterized by** comprising:
a housing, comprising an accommodation space and a first wall portion;
an electrode assembly, located within the accommodation space, wherein the electrode assembly comprises a first tab, the first tab is located on a side of the electrode assembly facing the first wall portion, and the first tab is connected to the first wall portion and divides the accommodation space into a first subspace and a second subspace; and
a pressure relief mechanism, disposed at the housing, wherein the pressure relief mechanism is configured to actuate when an internal pressure of the first subspace reaches a threshold to release the internal pressure of the first subspace;
wherein the first wall portion is provided with a communication channel, and the communication channel enables communication between the first subspace and the second subspace.

2. The battery cell according to claim 1, **characterized in that** the communication channel comprises a communication groove, the communication groove is formed on a surface of the first wall portion facing the first tab, one end of the communication groove communicates with the first subspace, and the other end of the communication groove communicates with the second subspace.

3. The battery cell according to claim 2, **characterized in that** a wall surface of the communication groove facing the first tab is provided with a support protrusion.

4. The battery cell according to claim 3, **characterized in that** the support protrusion protrudes from the communication groove.

5. The battery cell according to any one of claims 2 to 4, **characterized in that** a depth of the communication groove is T₁, and a thickness of the first wall portion is T₂, wherein 0.3 ≤ T1/T2 ≤ 0.6.

6. The battery cell according to claim 5, **characterized in that** 0.4 ≤ T₁/T₂ ≤ 0.5.

7. The battery cell according to any one of claims 2 to 6, **characterized in that** the first wall portion is circular, a width of the communication groove is L, and a diameter of the first wall portion is D, wherein 0 < L/D ≤ 0.1.

8. The battery cell according to claim 7, **characterized in that** 0.001 ≤ L/D ≤ 0.05.

9. The battery cell according to any one of claims 2 to 8, **characterized in that** a depth of the communication groove is T₁, wherein 0.1 mm ≤ T₁ ≤ 0.6 mm.

10. The battery cell according to claim 9, **characterized in that** 0.3 mm ≤ T₁ ≤ 0.5 mm.

11. The battery cell according to any one of claims 2 to 10, **characterized in that** a width of the communication groove is L, wherein 0.3 mm ≤ L ≤ 20 mm.

12. The battery cell according to claim 11, **characterized in that** 5 mm ≤ L ≤ 10 mm.

13. The battery cell according to any one of claims 1 to 12, **characterized in that** multiple communication channels are provided, wherein the multiple communication channels are distributed at intervals along a circumferential direction of the first tab.

14. The battery cell according to any one of claims 1 to 13, **characterized in that** the first tab is welded to the first wall portion to form a first weld structure; and
a projection of the first weld structure along a first direction and a projection of the communication channel along the first direction do not overlap or partially overlap; wherein the first direction is a distribution direction of the first tab and the first wall portion.

15. The battery cell according to any one of claims 1 to 14, **characterized in that** the battery cell further comprises a first current collector located between the first tab and the first wall portion, wherein the first current collector is connected to the first tab, and the first current collector is welded to the first wall portion to form a second weld structure; and
a projection of the second weld structure along a first direction and a projection of the communication channel along the first direction do not overlap or partially overlap; wherein the first direction is a distribution direction of the first tab and the first wall portion.

16. The battery cell according to any one of claims 1 to 15, **characterized in that** a surface of the first wall portion facing away from the first tab is provided with an identification structure, wherein the identification structure is configured to indicate a position of the communication channel.

17. The battery cell according to claim 16, **characterized in that** the identification structure comprises at least one of an identification protrusion, an identification groove, a sticker, and a stamp.

18. The battery cell according to any one of claims 1 to 17, **characterized in that** the first wall portion comprises a body and a protrusion, wherein the protrusion protrudes from a surface of the body facing the first tab, the protrusion is arranged around the body, the communication channel is disposed at the protrusion, the pressure relief mechanism is disposed at the body, the protrusion abuts against and is connected to the first tab, a pressure relief gap communicating with the communication channel is formed between the body and the first tab, and the pressure relief gap is located in the first subspace.

19. The battery cell according to any one of claims 1 to 18, **characterized in that** the housing comprises a shell and an end cover, wherein the end cover covers an opening of the shell, the end cover and the shell jointly enclose the accommodation space, the end cover is the first wall portion, or a wall portion of the shell is the first wall portion.

20. The battery cell according to any one of claims 1 to 19, **characterized in that** the electrode assembly further comprises a second tab, wherein the second tab is located on a side of the electrode assembly facing away from the first wall portion, and a polarity of the first tab is opposite to a polarity of the second tab; and
the battery cell further comprises an electrode terminal and a first insulating member, the housing comprises a second wall portion disposed opposite the first wall portion, the second wall portion is provided with an electrode lead-out hole communicating with the accommodation space, the first insulating member sleeves an outer side of the electrode terminal, the first insulating member passes through the electrode lead-out hole to insulate and separate the electrode terminal from the housing, and the second tab is connected to the electrode terminal to achieve electrical connection between the second tab and the electrode terminal.

21. The battery cell according to claim 20, **characterized in that** the electrode assembly further comprises a second current collector and a second insulating member, wherein the second current collector is connected between the second tab and the electrode terminal to realize electrical connection between the second tab and the electrode terminal, and at least a portion of the second insulating member is located between the second current collector and the second wall portion.

22. The battery cell according to claim 20 or 21, **characterized in that** the battery cell further comprises a sealing member, wherein the electrode terminal is provided with an electrolyte injection hole communicating with the accommodation space, and the sealing member covers an opening of the electrolyte injection hole facing away from the electrode assembly to seal the electrolyte injection hole.

23. A battery, **characterized by** comprising the battery cell according to any one of claims 1 to 22.

24. An electric apparatus, **characterized by** comprising the battery according to claim 23.
